# EUROPEAN PATENT APPLICATION

(11) **EP 4 653 153 A1**
(43) Date of publication of application: **26.11.2025**
(21) Application number: 23917637.3
(22) Date of filing: 16.11.2023
(51) Int. Cl.: B25J 15/06, B25J 13/00, B25J 13/08, B25J 15/00, B25J 15/04, B25J 19/00, B25J 19/02, B25J 19/04

(54) **ROBOT HAND, ROBOT CONTROL SYSTEM, FUNCTION RESTORATION PROCESSING SYSTEM, ROBOT CONTROL PROGRAM, AND FUNCTION RESTORATION PROCESSING PROGRAM**

(30) Priority: 17.01.2023 JP 2023005419; 24.03.2023 JP 2023049064; 04.04.2023 JP 2023060997; 17.04.2023 JP 2023067473; 11.05.2023 JP 2023078870
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2023/041331
(87) International publication number: WO 2024/154425

(57) **Abstract**

In the first invention, since a grip portion 20 is covered with a soft material 102, the soft material 102 is brought into close contact with a package 100 at the time of suction by plural suction pads 24, whereby it is possible to reliably hold the package 100 by being used as an auxiliary holding force at the time of suctioning the package 100 in an air suction structure of the suction pad 24, for example. In the second invention, a management server operating in cooperation with a robot control unit includes a function recovery processing unit that executes a function recovery process for recovering a function of the soft material as a part of the maintenance process in a case where the robot is docked in a dock station, whereby the soft material 102 attached to the grip portion 20 can recover the function by executing the replacement process or the cleaning process according to the frequency of the function decrease when the function as the assistance of the suction of the suction pad 24 decreases at the time of gripping the package 100 by the grip portion 20. In the third invention, a robot includes plural grip portions 20 that grip an object, a palm sensor unit 26 that is provided in each of the plural grip portions 20 and detects object information including a shape and a position of the object, and a control unit 142. The control unit 142 causes control for monitoring the palm sensor 26 to be interrupted periodically or irregularly, grasps accuracy of detection information of the palm sensor 26, and determines pass or fail of the accuracy. In a case of fail, the palm sensor 26 of the grip portion 20 that has not been selected is used. In addition to the grip portion 20 that is to grip the package 100, a grip portion 20 that functions as a support sensor faces the package 100, and the grip control of the grip portion 20L is executed on the basis of the detection information of the palm sensor 26 of the grip portion 20S, whereby a series of operations of confirming the position, gripping, and holding of the package by the grip portion can be quickly and reliably performed. In the fourth invention, provided are plural grip portions 20 attached to a robot and griping an object 100, a sensor group 12G having a first function of acquiring external information for controlling an operation of the robot and a second function of acquiring object information from the object 100, and a control unit 142 that moves the robot to a predetermined position on the basis of the external information and the object information, and controls the grip portions to grip the object by the grip portions. When a special object is selected by the second function of the sensor group, the control unit 142 grips the special object on the basis of a predetermined gripping form for the special object, whereby a series of operations of confirming the position and the type of the package, gripping, and holding and movement after gripping of the package by the grip portion can be quickly and reliably performed. In the fifth invention, provided are a grip portion 20 serving as a base for holding the object, an actuator provided in the grip portion and having a vacuum function for suctioning the object and sucking dust attached to the object, a palm sensor unit that is provided in the grip portion and detects object information including a shape and a position of the object, a first control unit that activates the vacuum function of the actuator as necessary on a basis of a detection result of the palm sensor unit and controls an operation of holding the object, and a second control unit that activates the vacuum function of the actuator prior to the operation of holding the object by the first control unit, whereby reduces the adverse effects of dust attached on the object in a series of operations of confirming the position, gripping, and holding of the package by the grip portion, and the operations can be quickly and reliably performed.

## Description

### Technical Field

The present disclosure relates to a robot hand, a robot control system, a function recovery processing system, a robot control program, and a function recovery processing program.

### Background Art

Humanoid robots for automatically performing work are used in a production line of a factory. Patent Literature 1 discloses attitude control of a humanoid robot.

Patent Literature 2 discloses a robot arm that is driven by an elastic actuator and has a plurality of joints. The robot arm is controlled by an arm tip support member that is disposed at an arm tip portion of the robot arm and contacts a support surface to support the robot arm, and a control unit that controls a contact force between the arm tip support member and the support surface and simultaneously controls a position and an orientation of the arm tip portion of the robot arm.

### Prior Art Document

### Patent Literature

Patent Literature 1: Japanese Patent Application Laid-Open (JP-A) No. 2019-093506
Patent Literature 2: WO 2011/001569 A1

### SUMMARY OF INVENTION

### Technical Problem

However, in picking work in a warehouse by a conventional humanoid robot, for example, in a scene where packages (shampoo, conditioner, cosmetics, toothpaste, cup noodles, confectionery bags, and the like having different shapes, weights, hardnesses, and breakabilities) are picked up from a shelf on which the packages are displayed, and the packages are accommodated in a predetermined packing body (box or the like) and packed, at present, a person's hand is relied on.

In addition, even if the structure of the grip portion of a robot is adapted to a finger type, the movement of fingers and arms is slow, so that productivity is low. Furthermore, in many totes and the like for accommodating packages, there may be an environment in which a space for receiving a robot hand is confined and the function of the robot hand cannot be sufficiently exhibited.

Note that the form of gripping of the grip portion includes all means for moving the package, such as gripping, adhesion, and suction.

In view of the above facts, an object of the disclosure is to obtain a robot hand, a robot control system, a function recovery processing system, a robot control program, and a function recovery processing program capable of quickly and reliably performing a series of operations including confirmation of a position and a type of a package by a grip portion, gripping, and holding and movement after gripping.

### Solution to Problem

A robot hand according to one aspect of the disclosure includes: a grip portion that serves as a base for holding an object; a suction pad that is provided on the grip portion and adhering to the object; and an amorphous mucilaginous and viscoelastic soft material that covers a surface of the grip portion with a predetermined thickness in a state where the suction pad protrudes and is deformable in accordance with an operation of the grip portion.

According to one aspect of the disclosure, when an object is suctioned by a suction pad, the adhesive force of a mucilaginous and viscoelastic soft material between suction points can be used to assist the suction force. That is, the soft material can reinforce the gripping force by replacing point contact on the object by the suction pad with surface contact.

A robot control system according to one aspect of the disclosure is a robot control system capable of holding an object while facing the object, the control system including: a grip portion serving as a base for holding the object; a suction pad provided on the grip portion and adhering to the object; an amorphous mucilaginous and viscoelastic soft material that covers a surface of the grip portion with a predetermined thickness in a state where the suction pad protrudes and is deformable in accordance with an operation of the grip portion; a palm sensor unit provided on the grip portion and detecting object information including a shape and a position of the object; and a control unit that controls an operation of gripping the object on the basis of a detection result of the palm sensor unit.

According to one aspect of the disclosure, the control unit controls the operation of gripping the object on the basis of the detection result of a palm sensor. This makes it possible to quickly and reliably perform a series of operations including confirmation, gripping, and holding of the position of the object (hereinafter, it may be referred to as package) by the grip portion.

In one aspect of the disclosure, the palm sensor unit includes: a camera that captures an image of the object to identify a type of the object; and a motion processing unit that specifies a position of the object.

The camera identifies the captured object on the basis of the captured image information. That is, it has a role of acquiring information for specifying the type (shape, size, hardness, and the like) of the object.

A processing unit, for example, a motion processing unit (MoPU) outputs, as motion information, vector information of motion of a point indicating a location of a package along a predetermined coordinate axis. That is, the motion information output from the MoPU includes only information indicating the motion (moving direction and moving speed) on the coordinate axis (x-axis, y-axis, and z-axis) of the center point (or center of gravity) of the object. That is, it is possible to accurately guide the trajectory when the grip portion approaches the object.

In one aspect of the disclosure, the control unit determines a state of an adhesive function with respect to the object in the soft material.

By continuously performing the gripping, the gripping function of the soft material may deteriorate due to adhesion of dust, deterioration, damage, or the like. This deterioration in the gripping function can be determined early.

In one aspect of the disclosure, the control unit shifts the robot from a gripping processing operation of the object to a function recovery processing operation for recovering the function of the soft material in a case where it is determined that the adhesive function is deteriorated in the determination of the adhesive function.

In a case where it is determined that the gripping function has deteriorated, the robot is caused to transition from the object gripping processing operation to the function recovery processing operation for recovering the function of the soft material. As a result, it is possible to reduce the gripping work in a state of reduced functionality.

A function recovery processing system according to an aspect of the disclosure is provided in a robot including a grip portion serving as a base for holding the object and an amorphous mucilaginous and viscoelastic soft material that is deformable in accordance with an operation of the grip portion, the system includes: a robot control unit that controls an operation of the grip portion to execute a gripping operation of gripping the object by using both gripping by the grip portion and adhesion by the soft material; and a management server that instructs the robot control unit to perform the gripping operation and control a maintenance process in a dock station that executes maintenance of the robot, in which the robot control unit includes a function determination unit that determines a state of an adhesive function with respect to the object in the soft material, and a destination setting unit that sets a destination of the robot to the dock station in a case where the function determination unit determines that a function is deteriorated, and the management server includes a function recovery processing unit that executes a function recovery process for recovering a function of the soft material as a part of the maintenance process in a case where the robot is docked in the dock station.

According to one aspect of the disclosure, the adhesive function recovery process can be executed in cooperation between the control unit of the robot and the work-based server.

In one aspect of the disclosure, the function recovery processing executed by the function recovery processing unit is executed by selecting either a replacement processing function of removing the existing soft material, supplying a new soft material, and covering the grip portion, or a cleaning processing function of cleaning a surface of the existing soft material.

Depending on the situation of functional degradation, replacement or cleaning can be selected.

A robot control program according to an aspect of the disclosure causes a computer to operate as the control unit.

A function recovery processing program according to an aspect of the disclosure causes a computer to operate as the function recovery processing unit.

A robot control system according to a first aspect includes: a plurality of grip portions that grips an object; a palm sensor unit provided in each of the plurality of grip portions to detect object information including a shape and a position of the object; and a control unit that selects the grip portion to grip the object, executes a gripping operation to grip the object on the basis of a detection result of the palm sensor unit attached to the selected grip portion, and determines pass/fail whether detection information of the palm sensor units attached to the plurality of grip portions has reached a predetermined accuracy level, in which the palm sensor unit attached to the selected grip portion detects the object information using a substitute sensor unit in a case where the determination fails.

According to the first aspect, the control unit selects the grip portion to grip the object, executes the grip operation to grip the object on the basis of the detection result of the palm sensor unit attached to the selected grip portion, and determines whether or not the detection information of the palm sensor units attached to the plurality of grip portions has reached a predetermined accuracy level.

Here, in a case where the palm sensor unit attached to the selected grip portion fails in the determination, the control unit detects the object information using the substitute sensor unit.

This makes it possible to quickly and reliably perform a series of operations of confirming, gripping, and holding the position of the package by the grip portion.

In a second aspect, in the first aspect, the substitute sensor unit is a palm sensor unit attached to the non-selected grip portion or a substitute dedicated support sensor unit attached to the robot.

According to the second aspect, a palm sensor of a non-selected grip portion may be used, or a substitute dedicated support sensor portion may be separately used. The substituted-dedicated support sensor unit is preferably provided, for example, on the head of the robot with emphasis on high versatility.

In a third aspect, in the first or second aspect, the determination of pass/fail in the control unit is made on the basis of information that is periodically or irregularly executed and updated.

According to the third aspect, since the latest information can always be acquired, the accuracy of grasping the object can be maintained.

A fourth aspect is characterized in that, in any one of the first to third aspects, the grip portion includes: a suction pad that adheres to the object; and an amorphous mucilaginous and viscoelastic soft material that covers a surface of the grip portion with a predetermined thickness in a state where the suction pad protrudes and is deformable in accordance with an operation of the grip portion.

According to the fourth aspect, when the object is adhered to the suction pad, the adhesive force of the mucilaginous and viscoelastic soft material between the suction points can be used to assist the suction force. That is, the soft material can reinforce the gripping force by replacing point contact on the object by the suction pad with surface contact.

In a fifth aspect, in the aspect according to any one of the first to fourth aspects, the palm sensor unit includes a camera that captures an image of the object to identify a type of the object, and a processing unit that specifies a position of the object.

The camera identifies the captured object on the basis of the captured image information. That is, it has a role of acquiring information for specifying the type (shape, size, hardness, and the like) of the object.

A processing unit, for example, a motion processing unit (MoPU) outputs, as motion information, vector information of motion of a point indicating a location of a package along a predetermined coordinate axis. That is, the motion information output from the MoPU includes only information indicating the motion (moving direction and moving speed) on the coordinate axis (x-axis, y-axis, and z-axis) of the center point (or center of gravity) of the object. That is, it is possible to accurately guide the trajectory when the grip portion approaches the object.

A robot control program according to a sixth aspect is operated as the control unit according to any one of the first to fifth aspects.

A robot control system according to a seventh aspect includes: a plurality of grip portions attached to a robot and grips an object; a sensor group having a first function of acquiring external information for controlling an operation of the robot and a second function of acquiring object information from the object; and a control unit that moves the robot to a predetermined position on the basis of the external information and the object information, and controls the grip portions to grip the object by the grip portions, in which when a special object is selected by the second function of the sensor group, the control unit grips the special object on the basis of a predetermined gripping form for the special object.

According to the seventh aspect, when the special object is selected by the second function of the sensor group, the control unit grips the special object on the basis of a predetermined gripping form for the special object.

This makes it possible to quickly and reliably perform a series of operations including confirming of the position and type of the package, gripping, and holding and moving after gripping by the grip portion.

According to an eighth aspect, it can be determined that deviating from the detection range means not a normal object, for example, having a higher temperature, a lower temperature, a stronger smell, or the like than a normal object. Therefore, the type of the special object can be specified on the basis of the detection information of the sensor whose detection value deviates from the allowable range.

A robot control system according to a ninth aspect further includes, in the eighth aspect, a storage unit in which a type-gripping form table in which the type of the special object and the gripping form of the special object are associated with each other is stored in advance, in which the control unit grips the special object by the gripping form for the special object determined on the basis of the type-gripping form table.

According to the ninth aspect, by specifying the type of the object, the gripping form can be easily determined using the type-gripping form table.

A robot control program according to a tenth aspect is operated as the control unit according to any one of seventh to ninth aspects.

A robot control system according to one aspect of the disclosure is a robot control system capable of holding an object while facing the object, the control system including: a grip portion serving as a base for holding the object; an actuator provided in the grip portion and having a vacuum function for suctioning the object and sucking dust attached to the object; a palm sensor unit that is provided in the grip portion and detects object information including a shape and a position of the object; a first control unit that activates the vacuum function of the actuator as necessary on a basis of a detection result of the palm sensor unit and controls an operation of holding the object; and a second control unit that activates the vacuum function of the actuator prior to the operation of holding the object by the first control unit.

According to one aspect of the disclosure, the first control unit activates the vacuum function of the actuator as necessary on the basis of the detection result of the palm sensor unit, and controls the operation of holding the object. The second control unit activates the vacuum function of the actuator to suck the dust attached to the object prior to the operation of holding the object by the first control unit. This makes it possible to quickly and reliably perform a series of operations of confirming, gripping, and holding the position of the package by the grip portion.

In the robot control system according to one aspect of the disclosure, the actuator further includes a blower function for wiping off dust attached to the object, and the second control unit uses both the vacuum function and the blower function.

In a robot control system according to an aspect of the disclosure, the actuator is a suction pad including a dish-shaped pad portion having an elastic force, and a nipple provided with a hole capable of sucking and releasing air provided at a center of the pad portion.

A robot control system according to an aspect of the disclosure further includes a dust detection sensor that detects whether dust adheres to a surface of the object, in which the operation of the second control unit is executed in a case where it is determined that the dust adheres from a detection result of the dust detection sensor.

A robot control system according to an aspect of the disclosure further includes an amorphous mucilaginous and viscoelastic soft material that covers a surface of the grip portion with a predetermined thickness in a state where the actuator is protruding and that is deformable in accordance with according to an operation of the grip portion.

In a robot control system according to an aspect of the disclosure, the palm sensor unit includes a camera that captures an image of the object to identify a type of the object, and a motion processing unit that specifies a position of the object.

The camera identifies the captured object on the basis of the captured image information. That is, it has a role of acquiring information for specifying the type (shape, size, hardness, and the like) of the object.

A motion processing unit (MoPU) outputs, as motion information, vector information of a motion of a point indicating a location of an object along a predetermined coordinate axis. That is, the motion information output from the MoPU includes only information indicating the motion (moving direction and moving speed) on the coordinate axis (x-axis, y-axis, and z-axis) of the center point (or center of gravity) of the object. That is, it is possible to accurately guide the trajectory when the grip portion approaches the object.

A robot control program according to an aspect of the disclosure causes a computer to operate as the first control unit and the second control unit.

The summary of the disclosure does not enumerate all the necessary features of the disclosure. A sub-combination of these feature groups may also be disclosed.

### Advantageous Effects of Invention

As described above, according to the disclosure, it is possible to quickly and reliably perform a series of operations of confirming position, gripping, and holding of the package by the grip portion.

### BRIEF DESCRIPTION OF DRAWINGS

Fig. 1 is a front view of a humanoid robot according to a first embodiment.
Fig. 2 is a side view of the humanoid robot of the first embodiment.
Fig. 3(A) is a front view of a palm side of a grip portion (L size, M size, and S size) having different sizes according to the first embodiment, and Fig. 3(B) is a perspective view of a suction pad attached to the grip portion.
Fig. 4(A) is a perspective view of a grip portion (L size), and Fig. 4(B) is a cross-sectional view taken along a line IVB-IVB in Fig. 4(A).
Fig. 5 is a view schematically illustrating an example of a functional configuration of the humanoid robot.
Fig. 6 is a diagram schematically illustrating an example of a processing routine executed by an information processing device.
Fig. 7 is a flowchart showing a procedure of grip control when a package is gripped by the grip portion in conjunction with the overall operation of the humanoid robot of Fig. 4.
Fig. 8 is a view illustrating an external appearance of a grip portion (humanoid) according to a first modification of the first embodiment, in which Fig. 8(A) is a perspective view and Fig. 8(B) is a perspective view.
Fig. 9 is a side view of a grip portion according to a second embodiment.
Fig. 10 is a front view of a dock station that performs function recovery of soft material according to the second embodiment.
Fig. 11 is a control flowchart illustrating a soft material function determination routine executed by the information processing device of the humanoid robot according to the second embodiment.
Fig. 12 is a flowchart illustrating a function recovery process control routine executed by a dock station management control unit in the dock station according to the second embodiment.
Fig. 13 is a flowchart illustrating a procedure of the grip control when the package is gripped by the grip portion in conjunction with the overall operation of the humanoid robot of Fig. 4 according to a third embodiment.
Fig. 14 is a flowchart illustrating a palm sensor accuracy monitoring control interruption routine for monitoring a palm sensor by regularly or irregularly interrupting the grip control of the package illustrated in Fig. 13 executed by the control unit according to the third embodiment.
Fig. 15 is a perspective view illustrating a state in which a palm sensor of another grip portion faces the package as a support sensor when a palm sensor of one grip portion fails according to the third embodiment.
Fig. 16 is a plan view in which a support sensor according to a second modification of the third embodiment is attached, in which Fig. 16(A) is a plan view of the humanoid robot of the present embodiment, and Fig. 16(B) is a plan view of the humanoid robot.
Fig. 17 is a view schematically illustrating an example of a functional configuration of the humanoid robot of a fourth embodiment.
Fig. 18 is a flowchart illustrating a procedure of the grip control when the package is gripped by the grip portion in conjunction with the overall operation of the humanoid robot of Fig. 4 according to the fourth embodiment.
Fig. 19 is a diagram according to the fourth embodiment, in which Fig. 19(A) is a table illustrating a package type-gripping form table and associated information stored in an information accumulation unit of an information processing device, and Fig. 19(B) is a plan view of a fresh food item which is an example of a type of the package.
Fig. 20 is a piping diagram of a suction pad according to a fifth embodiment.
Fig. 21 is a flowchart illustrating a procedure of the grip control when the package is gripped by the grip portion in conjunction with the overall operation of the humanoid robot of Fig. 4 according to the fifth embodiment.
Fig. 22 is a flowchart illustrating a flow of cleaning mode process control executed in Step 555C of Fig. 21 according to the fifth embodiment.
Fig. 23 is a piping diagram of a suction pad according to a second modification in the fifth embodiment.
Fig. 24 is a piping diagram of a suction pad according to a third modification in the fifth embodiment.
Fig. 25 is a diagram schematically illustrating an example of a hardware configuration of a computer that functions as an information processing device.

### DESCRIPTION OF EMBODIMENTS

Hereinafter, the disclosure will be described through embodiments, but the following embodiments do not limit the invention according to the claims. In addition, not all combinations of features described in the embodiments are essential to the disclosed solutions.

### [First Embodiment]

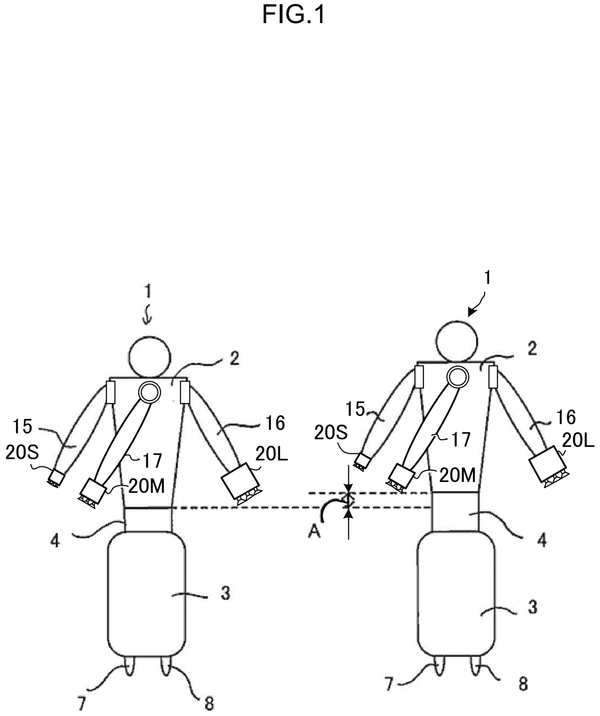

Fig. 1 is a front view of a humanoid robot according to a first embodiment. As illustrated in Fig. 1, a humanoid robot 1 according to the embodiment includes an upper body portion 2, a leg portion 3, and a connecting portion 4 that rotatably connects the upper body portion 2 to the leg portion 3. For example, the humanoid robot 1 is disposed in a production line or the like of a factory, and performs work on an object (such as a falling object) on a line or a floor including a shelf on which a package 100 or the like as a picking object is displayed. Note that the work includes packing for storing the gripped package 100 in a predetermined housing (cardboard or the like) in addition to picking for gripping the package 100 from the shelf.

The upper body portion 2 has three arm portions 15, 16, and 17. The arm portions 15, 16, and 17 are rotatably attached to the left, right, and front of the upper body portion 2. Furthermore, grip portions 20S, 20L, and 20M (collectively referred to as a grip portion 20 to be described below in detail) for gripping the package 100 are attached to the distal ends of the arm portions 15, 16, and 17, respectively. Note that the number of the arm portions is not limited to three, and may be one, two, or four or more. However, in the first embodiment, a three-sized grip portion 20 (S, M, and L) is provided.

The leg portion 3 has two wheels 7 and 8 attached to a lower portion of the leg portion 3, and the leg portion 3 is movable on a floor on which the humanoid robot 1 is disposed.

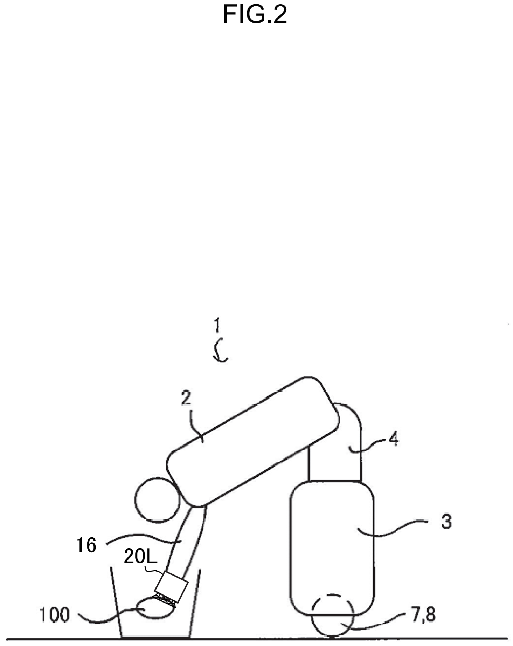

The connecting portion 4 rotatably connects the upper body portion 2 and the leg portion 3. Therefore, the upper body portion 2 can be tilted forward and backward with respect to the leg portion 3. Therefore, as illustrated in Fig. 2, the humanoid robot 1 of the first embodiment can tilt upper body portion 2 forward with respect to the leg portion 3 to pick up the package placed on the shelf, the package 100 placed on the floor, and the package 100 dropped on the floor during the work.

The leg portion 3 has a balance function for preventing the humanoid robot 1 from falling when the upper body portion 2 tilts forward or backward with respect to the leg portion 3 or the humanoid robot 1 moves.

Furthermore, as illustrated in Fig. 1, the connecting portion 4 has a function of changing a distance between the upper body portion 2 and the leg portion 3. Therefore, the position of the upper body portion 2 in the vertical direction with respect to the leg portion 3 can be adjusted as indicated by an arrow A so as to match the height of the workbench in the production line.

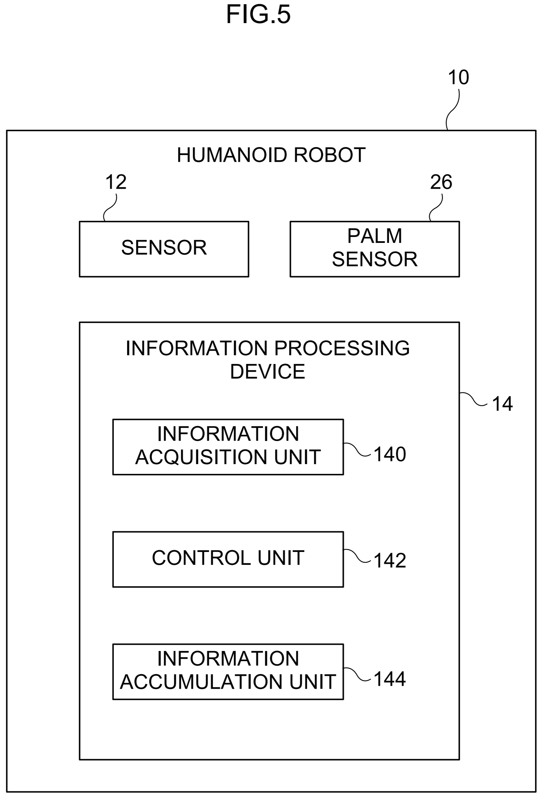

The driving of the humanoid robot 1 of the first embodiment is controlled by a control system 10 (see Fig. 5) mounted in the humanoid robot 1.

### (Structure of Grip Portion 20)

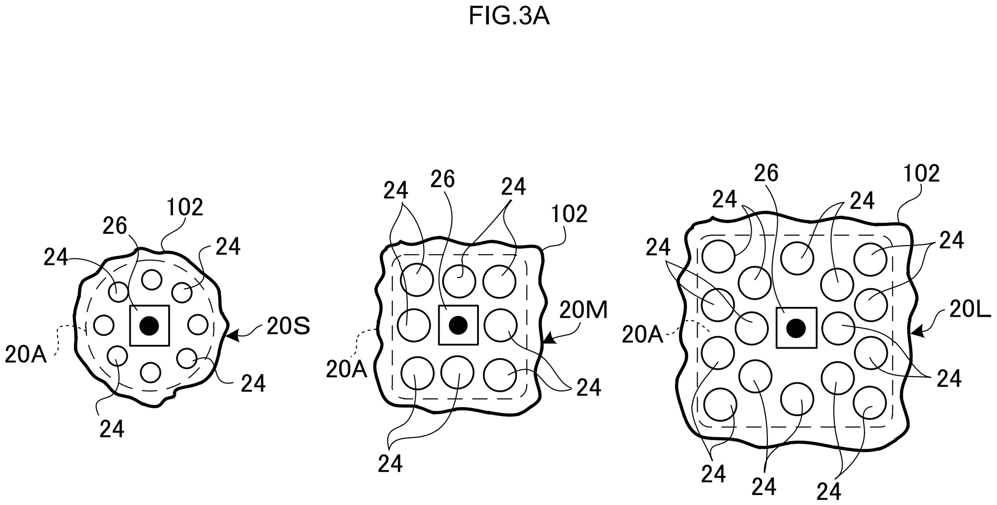

As illustrated in Fig. 3(A), an S-sized grip portion 20S is attached to the distal end of the arm portion 15, an L-sized grip portion 20L is attached to the distal end of the arm portion 16, and an M-sized grip portion 20M is attached to the distal end of the arm portion 17. The grip portion 20 is rotatably attached to the arm portions 15, 16, and 17. The correspondence relationship between the arm portions 15, 16, and 17 and the grip portions 20S, 20L, and 20M is not particularly limited.

The grip portion 20S includes a rectangular main body portion 20A, and a plurality of (in the first embodiment, eight) suction pads 24 are attached to a distal end surface of the main body portion 20A (a surface facing the package 100 as a package). The suction pad 24 of the grip portion 20S has a smaller diameter than the suction pad 24 of the grip portion 20M and the suction pad 24 of the grip portion 20L. Note that all the diameters may be the same.

The grip portion 20M includes a rectangular main body portion 20B larger than the grip portion 20S, and a plurality of (in the first embodiment, eight) suction pads 24 are attached to a distal end surface of the main body portion 20B (a surface facing the package 100 as a package). The suction pad 24 of the grip portion 20M has a larger diameter than the suction pad 24 of the grip portion 20S and a smaller diameter than the suction pad 24 of the grip portion 20L. Note that all the diameters may be the same.

The grip portion 20L includes a rectangular main body portion 20C, and a plurality of (in the first embodiment, 16) suction pads 24 are attached to a distal end surface of the main body portion 20C (a surface facing the package 100 as a package). The suction pad 24 of the grip portion 20L has a larger diameter than the suction pad 24 of the grip portion 20M and the suction pad 24 of the grip portion 20S. Note that all the diameters may be the same.

In addition, a palm sensor 26 is attached to the central portion of the distal end surface of each of the main body portion 20A of the grip portion 20S, the main body portion 20B of the grip portion 20M, and the main body portion 20C of the grip portion 20L of the first embodiment. The palm sensor 26 includes a high-resolution camera that identifies the type of the package 100 and a motion processing unit (MoPU) that identifies the position of the package 100.

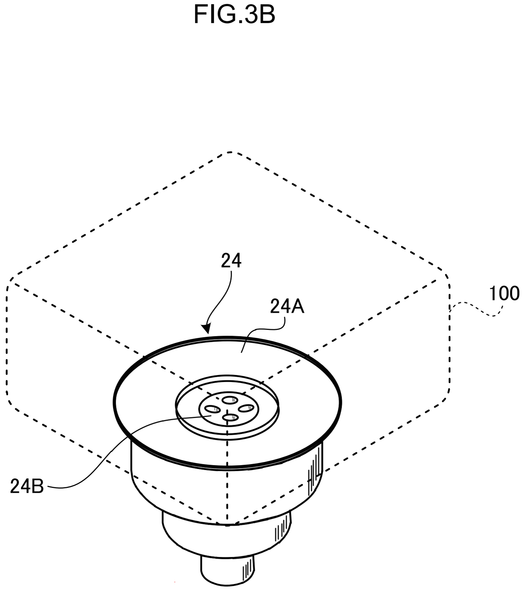

As illustrated in Fig. 3(B), the suction pad 24 includes a rubber pad portion 24A facing the package 100 when the gripping the package 100, and a nipple 24B forming an air flow path for sucking air in a sealed space formed by close contact between the pad portion 24A and the package 100.

That is, the suction pad 24 of the first embodiment has an air suction structure, and has a suction force by sucking air in the sealed space from a hole 24C provided in the nipple 24B and performing vacuum (including substantially vacuum). Note that the suction pad 24 is not limited to the air suction structure, and may have a structure in which the volume of the sealed space is simply changed by the deformation of the pad portion 24A.

Here, the grip portion 20 is covered with amorphous mucilaginous soft material 102 that can be deformed into various shapes by external force or gravity. The soft material 102 is deformed according to the operation of the grip portion 20, and maintains a covered state with a predetermined thickness with respect to the grip portion 20.

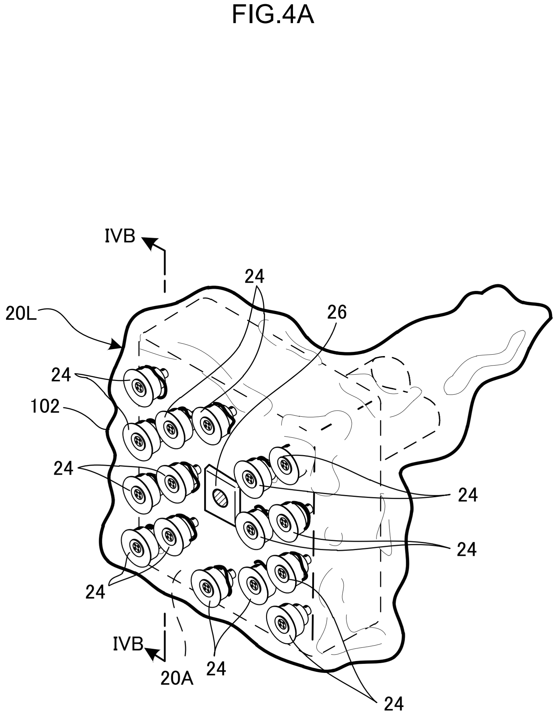

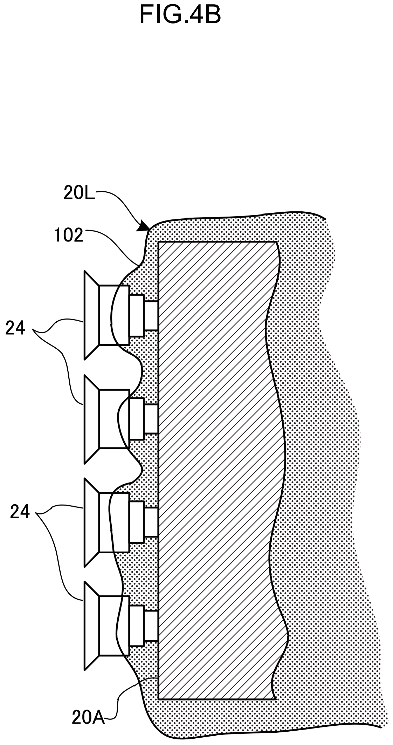

As illustrated in Figs. 4(A) and 4(B), the pad portion 24A of the suction pad 24 protrudes from the soft material 102 and can directly contact with the package 100.

In terms of physical properties, the soft material 102 can be said to be a viscoelastic member that behaves fluidly when the speed of deformation is high, but behaves elastically when the speed of deformation is low, and as an example, a material such as silicon (resin, rubber) or slime is representative.

In the first embodiment, the reason why the grip portion 20 is covered with the soft material 102 is that, when the package 100 is adhered to the suction pad 24, the adhesive force of the mucilaginous and viscoelastic soft material 102 between the suction points is used to assist the suction force.

In other words, the soft material 102 serves to replace a near-point contact by the suction pad 24 with surface contact.

The high-resolution camera included in the palm sensor 26 of the first embodiment identifies what the captured object 100 is, whether it is a care product such as a shampoo, a conditioner, a cosmetic, or a toothpaste, or a food product such as a cup noodle or a confectionery bag, on the basis of captured image information.

In other words, the high-resolution camera has a role of acquiring information for specifying the type (shape, size, hardness, and the like) of the package 100.

On the other hand, the MoPU included in the palm sensor 26 of the first embodiment together with the high-resolution camera outputs the motion information indicating the captured motion (in this case, the movement is relative to the arm portions 15, 16, and 17) of the package 100 from the image of the package 100 captured at a frame rate of 1000 frames/second or more, for example, at a frame rate of 1000 frames/second or more. Note that the frame rate may be increased in a case where the package 100 being moved is detected, and the frame rate may be decreased in a case where a fixed object (the package 100 not moving) is detected.

The MoPU outputs vector information of a motion along a predetermined coordinate axis of a point indicating the location of the package 100 as motion information. That is, the motion information output from the MoPU does not include information necessary for identifying what the captured package 100 (the care product and the food) is, and includes only information indicating the motion (moving direction and moving speed) on the coordinate axis (x-axis, y-axis, and z-axis) of the center point (or the center of gravity) of the package 100.

That is, it is possible to accurately guide the trajectory when the grip portion 20 approaches the package 100.

Information output from the palm sensor 26 including the high-resolution camera and the MoPU is supplied to an information processing device 14.

The information processing device 14 can specify the position of the package 100 with high accuracy on the basis of the information from the palm sensor 26 including the high-resolution camera and the MoPU, calculate the degree of spread of the finger portions 22A, 22B, and 22C at the time of gripping, the strength at the time of gripping, the suction force by the suction pad 24, and the like, control minute movements of the arm portions 5 and 6 and the grip portion 20 with high accuracy, and can cope with work (picking work, packing work, or the like) targeting various packages 100.

Fig. 5 is a schematic view illustrating an example of the control system of the humanoid robot of the first embodiment. The control system 10 includes a sensor 12 mounted on the humanoid robot, the palm sensor 26 including the high-resolution camera and the MoPU, and the information processing device 14.

The sensor 12 sequentially acquires information indicating at least a distance and an angle between the package 100 around the humanoid robot 1 that the humanoid robot 1 works on and the arm portions 5 and 6. As the sensor 12, a highest-performance camera, a solid-state LiDAR, a multi-color laser coaxial displacement meter, or various other sensor groups can be adopted. In addition, examples of the sensor 12 include a vibratory meter, a thermo camera, a hardness meter, radar, LiDAR, a high-pixel, telephoto, ultra-wide angle, 360 degrees, high-performance camera, vision recognition, fine sound, ultrasonic wave, vibration, infrared ray, ultraviolet ray, electromagnetic wave, temperature, humidity, spot AI weather forecast, high-accuracy multi-channel GPS, low-altitude satellite information, long tail incident AI data, and the like.

In addition to the above-described information, the sensor 12 detects an image, a distance, vibration, heat, smell, color, sound, ultrasonic wave, ultraviolet ray, infrared ray, or the like. In addition, examples of the information detected by the sensor 12 include the movement of the center of gravity of the humanoid robot 1, the detection of the material of the floor on which the humanoid robot 1 is installed, the detection of the outside air temperature, the detection of the outside air humidity, the detection of the vertical and lateral oblique inclination angle of the floor, and the detection of the moisture amount.

The sensor 12 performs these detections, for example, every nanosecond.

The palm sensor 26 (high-resolution camera and MoPU) is a sensor provided in the grip portion 20 of the arm portions 15, 16, and 17, and has a camera function of capturing the package 100 and a position specifying function of specifying the position of the package 100 separately from the sensor 12.

Note that, in a case where one MoPU 12 is used, it is possible to acquire vector information of the motion of the point indicating the location of the package 100 along each of the two coordinate axes (x-axis and y-axis) in the three-dimensional orthogonal coordinate system. Using the principle of a stereo camera, vector information of the motion of the point indicating the location of the package 100 along each of the three coordinate axes (x-axis, y-axis, and z-axis) in the three-dimensional orthogonal coordinate system may be output using the two MoPUs 12. The z-axis is an axis along the depth method (traveling of the vehicle).

The information processing device 14 includes an information acquisition unit 140, a control unit 142, and an information accumulation unit 144.

The information acquisition unit 140 acquires information of the package 100 detected by the sensor 12 and the palm sensor 26 (high-resolution camera and MoPU).

The control unit 142 uses the information acquired by the information acquisition unit 140 from the sensor 12 and an artificial intelligence (AI) to control the rotation operation of the connecting portion 4, the movement operation in the vertical direction, the operations of the arm portions 5 and 6, and the like.

In addition, the control unit 142 grasps the type (shape, size, hardness, and the like) and the position of the package 100 in detail using the information acquired by the information acquisition unit 140 from the palm sensor 26 (high-resolution camera and MoPU), and performs control to cause a palm side 20A to face, cause the suction pad 24 to adhere to, and cause the three finger portions 22A, 22B, and 22C to grip the package according to the outer shape and the position (grip control). Note that the grip control (only "adhesion", only "gripping", combination of "adhesion" and "gripping", or the like) may be selected by grasping the type of the package 100 on the basis of the outer shape information.

For example, the control unit 142 executes the following processes as an overall operation.
(1) The connecting portion 4 is driven so that the package 100 on the shelf and the floor can be picked up, and the upper body portion 2 is tilted forward or backward.
(2) The arm portions 15, 16, and 17 and the grip portion 20 are driven so that the package 100 can be gripped.
(3) The upper body portion 2 is driven up and down with respect to the leg portion 3 so as to match the height of the workbench of the production line.
(4) In order to prevent humanoid robot 1 from falling, a balance is taken.
(5) Driving of the wheels 7 and 8 is controlled such that humanoid robot 1 can push the cart or the like.

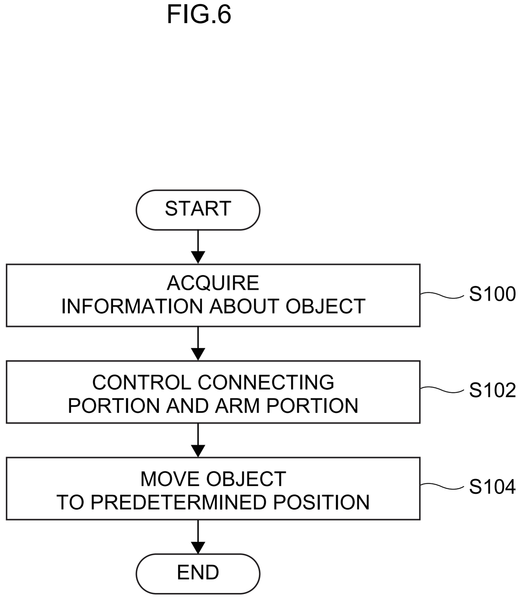

For example, when picking up the package 100 on the floor, the information processing device 14 repeatedly executes the flowchart illustrated in Fig. 6.

In Step S100, the information acquisition unit 140 acquires information of the package 100 detected by the sensor 12.

In Step S102, the control unit 142 controls the connecting portion 4 and the arm portions 15, 16, and 17 using the information of the package 100 acquired in Step S100 and the AI, thereby picking up the package 100 on the floor.

In Step S104, the control unit 142 moves the picked up package 100 to a predetermined position.

According to the first embodiment, the humanoid robot 1 includes the upper body portion 2, the leg portion 3, and the connecting portion 4 that rotatably connects the upper body portion 2 and the leg portion 3. In addition, the rotation of the connecting portion 4 is controlled on the basis of the information acquired by the sensor 12. Therefore, a distance and an angle between the humanoid robot 1 and the object can be determined, so that the operation of picking up the object on the floor can be performed.

In addition, since the connecting portion 4 can change the distance between the upper body portion 2 and the leg portion 3, the position of the upper body portion 2 in the vertical direction with respect to the leg portion 3 can be adjusted so as to match the height of the workbench in the production line.

The leg portion 2 has a balance function for preventing the humanoid robot 1 from falling when the upper body portion 2 tilts forward or succeeds the leg portion 3. Therefore, it is possible to prevent humanoid robot 1 from falling down when the work of pushing or pulling the package 100 on the production line is performed. Therefore, it is possible to prevent a failure of the humanoid robot 1 due to the falling or an injury of a person around the humanoid robot 1.

### (Grip Control of Package 100)

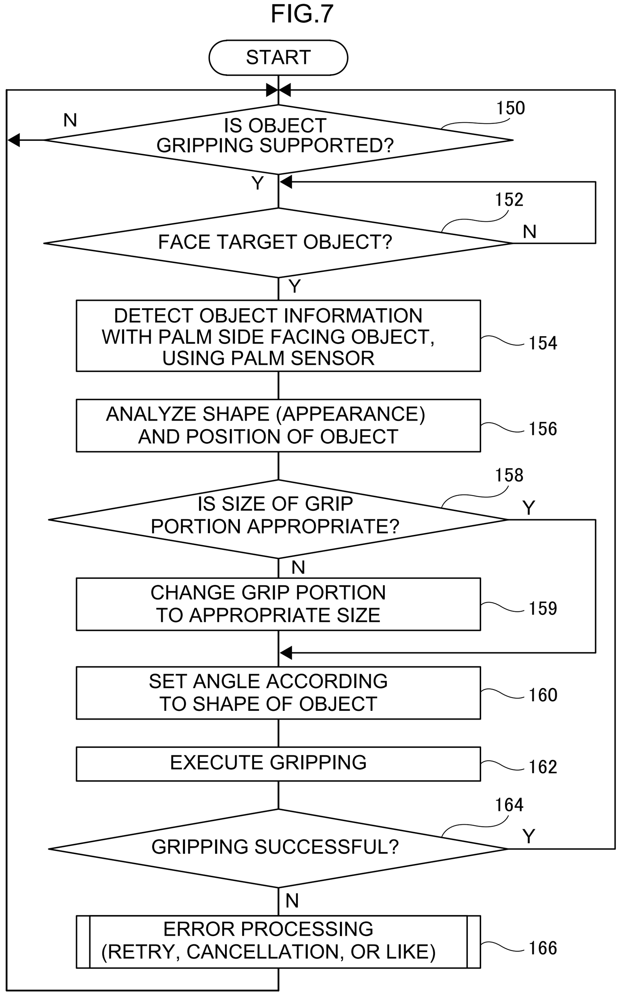

Fig. 7 is a flowchart illustrating a procedure of the grip control when the grip portions 20S, 20M, and 20L in Figs. 3 and 4 are selected to grip the package 100 in conjunction with the overall operation of the humanoid robot 1.

In Step 150, whether the instruction to grip the package 100 is received is determined, and when an affirmative determination is made, the process proceeds to Step 152, the humanoid robot 1 is moved (for example, any one of arm portions 15, 16, and 17 is operated), the palm side 20A is made to face target package 100, and the process proceeds to Step 154.

In Step 154, information on the package 100 is detected with the palm side 20A facing the package.

In the next Step 156, the detection information by the palm sensor 26 (high-resolution camera and MoPU) is analyzed to grasp the type (shape, size, hardness, and the like) and position of the package 100 in detail, and the process proceeds to Step 158.

In Step 158, it is determined whether or not the size of the grip portion 20 is appropriate for the package 100. When it is determined in Step 158 that the size is inappropriate (negative determination), the processing proceeds to Step 159, and the size is changed to the arm portion 15, 16, or 17 of the appropriate size, and the processing proceeds to Step 160.

When it is determined in Step 158 that the size is appropriate (affirmative determination), the process proceeds to Step 160.

In Step 160, the angles of the grip portion 20S of the arm portion 15, the grip portion 20M of the arm portion 16, and the grip portion 20L of the arm portion 17 according to the shape of the package 100 are set, and the process proceeds to Step 162.

In Step 162, gripping of the package 100 is executed.

Here, in the first embodiment, since the grip portion 20 is covered with the soft material 102, the soft material 102 comes into contact with the package 100, deforms in accordance with the shape of the package 100, and comes into close contact with the package 100 at the time of the suction processing of the suction pad 24.

In the next Step 164, it is determined whether or not the gripping of the package 100 has succeeded. In a case where an affirmative determination is made, the gripped package 100 is carried to a predetermined place, and the process proceeds to Step 150 and waits for an instruction to grip the next package 100.

In addition, in a case where a negative determination is made in Step 164, the process proceeds to Step 166, error processing (for example, retry or cancellation) is executed, and the process returns to Step 150.

As described above, according to the first embodiment, since the grip portion 20 is covered with the soft material 102, the soft material 102 is brought into close contact with the package 100 at the time of suction by the plurality of suction pads 24, and thus, it is possible to reliably hold the package 100 by being used as an auxiliary holding force at the time of suctioning the package 100 in the air suction structure of the suction pad 24, for example.

That is, in the soft material 102, the near-point contact of the suction pad 24 with respect to the package 100 is replaced with the surface contact, and thus, it is possible to stabilize the holding force of the package 100, and it is possible to prevent a problem such as falling off due to vibration during movement in advance.

In addition, even if the package 100 is accommodated in a narrow tote and the suction pad 24 cannot be positioned as desired, the package can be reliably suctioned by the suction pad 24 after being adhered to and pulled out by the soft material 102.

In the first embodiment, the palm sensor 26 including the high-resolution camera and the MoPU is attached, and the grip portion 20 having the above structure is mounted on the arm portions 15, 16, and 17 of the humanoid robot 1, so that the object can surely be picked up by the suction surface, and even if the humanoid robot 1 moves quickly, the package 100 can be carried without dropping from the grip portion 20.

Furthermore, since the palm sensor 26 (high-resolution camera and MoPU) is mounted on the palm side 20A, the package 100 can be captured with high accuracy, and it is possible to cope with work that makes minute movement.

### (First Modification)

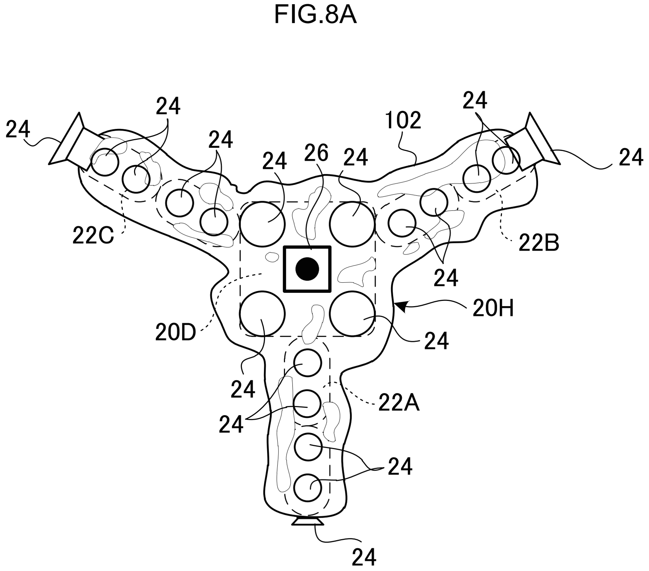

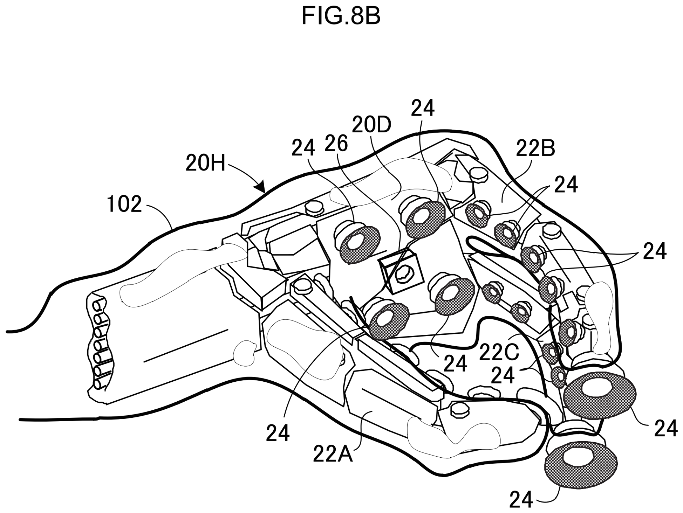

Fig. 8 illustrates a configuration of a grip portion 20H according to a first modification of the first embodiment.

The grip portion 20H according to the modification has a structure imitating the shape of a human hand (see Fig. 8(B)) including three finger portions 22A, 22B, 22C each including a plurality of joints.

In the modification, as illustrated in Fig. 8(B), a three-finger structure is adopted, but a five-finger structure may be adopted.

A plurality of suction pads 24 are attached to a palm side 20D of the grip portion 20.

In addition, a plurality of suction pads 24 are attached to each of the three finger portions 22A, 22B, and 22C with a joint portion as a boundary. All the suction pads 24 may have the same diameter, but the suction pads 24 having different diameters may be attached for each finger or each joint, and may be selected according to the size, hardness, weight, and the like of the package 100.

Also in the grip portion 20H having the above configuration, the soft material 102 is covered similarly to the first embodiment. By covering the soft material 102, when the grip portion 20H grips the package 100, the soft material 102 is deformed in accordance with the shape of the package 100 and comes into close contact with the package 100, and it is possible to assist holding of the package 100 by suction of the suction pad 24.

For example, a very soft and fragile object can be gripped by movement of the fingers 22A, 22B, and 22C without using the suction pad 24, but adhesion of the soft material 102 effectively acts as an aid to the gripping operation. In other words, damage and the like of the soft package 100 can be prevented by adjusting the adhesion force of the soft material 102 and the gripping force.

In the first embodiment (including the modification), the humanoid robot 1 is taken as an example, and the general-purpose work in which the humanoid robot 1 moves to a first predetermined position, grips the package 100, and conveys the package 100 to a second predetermined position is described. However, the grip portion 20 (20S, 20M, and 20L) of the first embodiment can effectively exhibit the effect in, for example, specific works 1 to 4 described below. Further, the grip portion 20 of the first embodiment is not limited to the following specific works 1 to 4, and can be applied to all works including a step of gripping the package 100.

(Specific Work 1) A work of gripping the package 100 at a first predetermined position, conveying the package to a second predetermined position, and packaging the package 100 in a predetermined container (cardboard or the like) at a second predetermined value.

(Specific Work 2) A work of gripping and picking up the package 100 conveyed by a belt conveyor or the like at a fixed position, and packing the package in a container (cardboard or the like) on the spot.

(Specific Work 3) A work of receiving package 100 that another humanoid robot 1 grips and conveys, and packing the package in a container (such as cardboard) on the spot.

(Specific Work 4) A work of unpacking a delivered container (cardboard or the like), taking out the package 100, and transporting and storing the package to a predetermined management shelf (based on an identification code assigned in advance).

### [Second Embodiment]

Hereinafter, a second embodiment of the disclosure will be described. In the second embodiment, the same components as those in the first embodiment are denoted by the same reference numerals, and the description of the components is omitted.

A feature of the second embodiment is that a configuration that enables replacement of the soft material 102 due to functional degradation accompanied by time degradation or the like is added.

The main function of the soft material 102 is to adsorb the package 100. However, when the surface of the soft material 100 that adsorbs the package lowers its adhesive force due to adhesion of dust attached to the surface of the package or dust floating in the workplace, the suction force as designed may not be obtained.

Therefore, the function determination of the soft material is performed at a predetermined time, necessity of function recovery is determined, and the means for function recovery (cleaning, replacement) in a case where function recovery is necessary is executed.

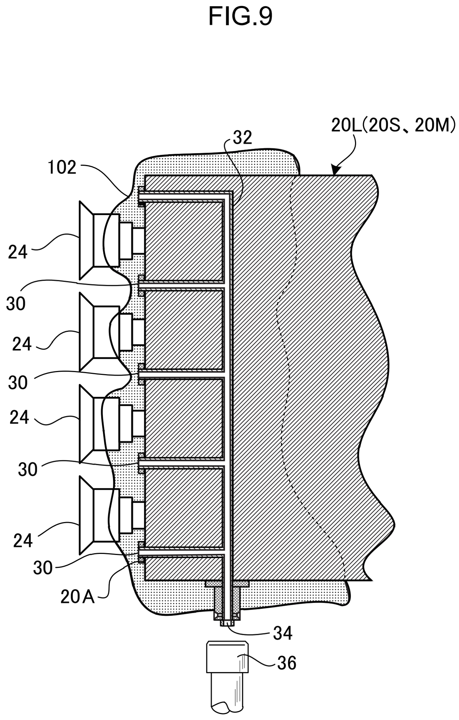

Fig. 9 is a side view of the grip portion 20L according to the second embodiment. Note that, although illustrated as the grip portion 20L in Fig. 9, in the second embodiment, the other grip portions (20S and 20M) can have the same configuration.

A plurality of discharge ports 30 are provided on a surface of the main body portion 20A on which the suction pad 24 is attached.

The discharge ports 30 communicate with each other by an introduction path 32 provided in the main body portion 20A. The introduction path 32 is provided on a side surface (in Fig. 9, the lower surface) of the main body portion 20A and communicates with an inlet port 34, and has a structure in which the fluid flowing in from the inlet port 34 is discharged from the plurality of discharge ports 30 via the introduction path 32. The fluid is a mixed liquid of the main agent and the catalyst before being cured, and corresponds to a stock solution that can be used as the soft material 102.

In the second embodiment, the main agent of the fluid flowing in from the inlet port is a silicon polymer. The silicon polymer as a main agent is a generic term for silicon rubber, silicon oil, silicon resin, and the like among polymers of an organic silicon compound (silicone), and is shown here as an example of the soft material 102 having adhesiveness. That is, the characteristics, composition, and the like of the main agent can be appropriately changed and adjusted as long as the characteristics, composition, and the like of the soft material 102 are not specified and can be applied as the application (mainly, assistance of suction of the suction pad 24 when gripping the package 100) of the first embodiment.

In addition, in the second embodiment, the catalyst of the fluid flowing in from the inlet port is a curing agent that is mixed at a predetermined ratio with respect to the main agent 100. The main agent is cured by being left at a predetermined temperature for a predetermined time, and desired curing properties as soft material 102 can be obtained.

Examples of the curing physical properties include specific gravity, hardness, tensile strength, elongation, linear shrinkage, and the like, and the ratio of the main agent and the catalyst and the temperature at the time of curing may be determined so as to achieve appropriate curing physical properties for adhesion of the package 100.

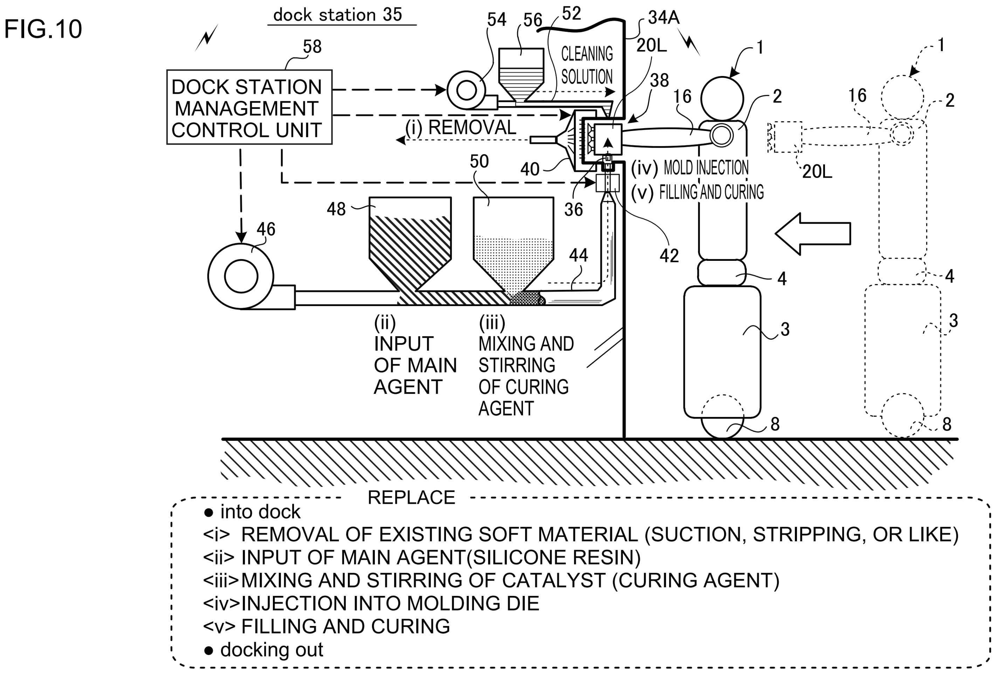

A silicon injection plug 36 (to be described below in detail) provided in a dock station 35 (see Fig. 10) is detachably attached to the inlet port 34, and when a function recovery process is required, a fluid flows into the dock station 35 in a state where the silicon injection plug 36 is attached to the inlet port 34.

### (Dock Station 35)

Fig. 10 is a front view of a dock station 35 performing functional recovery of the soft material 102.

The dock station 35 has a replacement function to replace the soft material 102 and a cleaning function to clean the soft material 102.

The dock station 35 is provided with a function recovery dock 38 on a wall surface 34A to which the humanoid robot 1 approaches.

The function recovery dock 38 is a space recessed into a box shape, and the humanoid robot 1 faces the function recovery dock 38 and the arm portion 15 (or 16 or 17) faces the function recovery dock 38, so that the grip portion 20 can be inserted into the function recovery dock 38.

Regardless of whether the process of replacing or cleaning the soft material 102 is executed, the process is executed by inserting the grip portion 20 into the function recovery dock 38.

### (Replacement Function)

The function recovery dock 38 is provided with a removal device 40 for removing the existing soft material 102 (covering the main body portion 20A). The means for removing the soft material 102 by the removal device 40 is not particularly limited, for example, removing by suction force, removing by peeling, or removing by using a solvent, and the existing soft material 102 may be removed when replacement is required. The removed soft material 102 is basically discarded, but if the soft material 102 can be returned to the original fluid with a solvent, the soft material may be cleaned to remove dust and the like and reused.

In addition, the function recovery dock 38 is provided with a silicon injection plug 36, and when the grip portion 20 is inserted into the function recovery dock 38 and faces the inlet port 34, the function recovery dock can be attached to and detached from the inlet port 34 by driving of a socket attaching/detaching unit 42 (for example, a solenoid or the like).

The replacement function includes a fluid pipeline 44, one end portion thereof is connected to the silicon injection plug 36 described above, and the other end portion thereof is connected to a discharge port of a first blower 46. By the driving of the first blower 46, the inside of the fluid pipeline 44 is pressurized and the fluid flows.

A main agent tank 48 and a catalyst tank 50 are attached to the middle of the fluid pipeline 44 through orifice portions (not illustrated).

Here, when the first blower 46 is driven, the main agent (silicone resin) is taken in from the main agent tank 48 into the fluid pipeline 44, and subsequently the catalyst (curing agent) is taken in from the catalyst tank 50 and supplied to the inlet port 34 provided in the main body portion 20A of the grip portion 20 while being stirred (hereinafter, referred to as a fluid).

The fluid supplied to the main body portion 20A is discharged from the plurality of discharge ports 30, and when the applied fluid is discharged, the main body portion 20A is covered with the fluid, and the inner surface of the function recovery dock 38 becomes a molding die and is maintained in a predetermined shape.

### (Cleaning Function)

The cleaning function has a cleaning solution pipeline 52, one end portion thereof communicates with the inner surface of the function recovery dock 38, and the other end portion thereof is connected to a discharge port of a second blower 54. By driving the second blower 54, the inside of the cleaning solution pipeline 52 is pressurized and the fluid flows.

In the middle of the cleaning solution pipeline 52, a cleaning solution tank 56 is attached via an orifice portion (not illustrated).

Here, when the second blower 54 is driven, the cleaning solution is taken into the cleaning solution pipeline 52 from the cleaning solution tank 56 and supplied to the function recovery dock 38. The cleaning solution is not particularly limited as long as dust adhering to the surface can be removed, and for example, water may be used, but a neutral detergent is preferably used. The neutral detergent may be diluted with water at a predetermined ratio.

With this cleaning solution, the surface of the soft material 102 covering the main body portion 20A of the grip portion 20 stored in the function recovery dock 38 is cleaned, and the adhesive function is recovered. The cleaning solution may be discharged by a drain pipe (not illustrated) or the like. Water and neutral detergents can be discharged to a general sewer. The cleaning solution may be collected by the removal device 40 and reused, for example, through a filter.

The dock station 35 is provided with a dock station management control unit 58 to control operations of the removal device 40, the socket attaching/detaching unit 42, the first blower 46, a cleaning device 52, and the second blower 54.

In addition, the dock station management control unit 58 can wirelessly communicate with the information processing device 14 (see Fig. 5) of the humanoid robot 1, and share the replacement or cleaning necessity information of the soft material 102 with each other, and the movement of the humanoid robot 1 to the function recovery dock station 35 and the control of the preparation, execution, and the like of the replacement or the cleaning in the function recovery dock station 35 are synchronized.

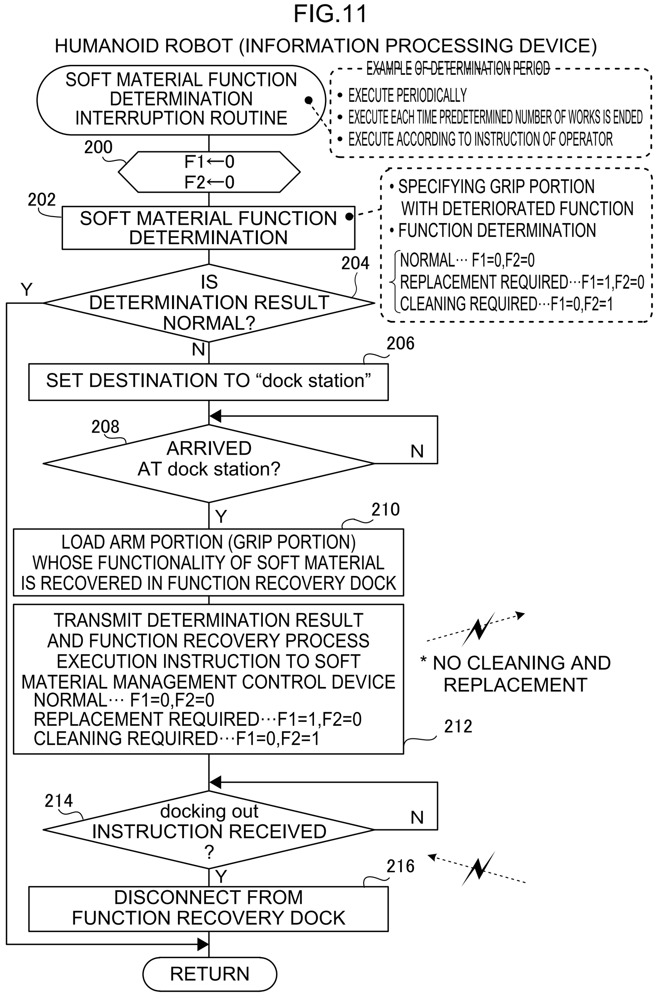

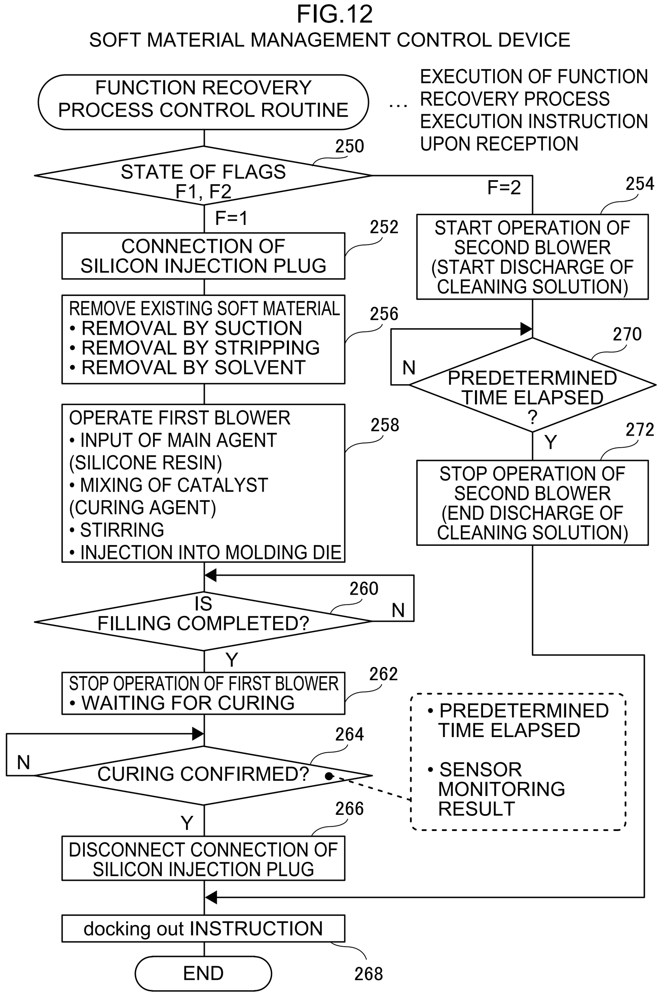

Hereinafter, the operation of the second embodiment will be described with reference to the flowcharts of Figs. 11 and 12.

### (Soft Material Function Determination Processing on Humanoid Robot 1 Side)

Fig. 11 is a control flowchart illustrating a determination routine of the function of the soft material 102 executed by the information processing device 14 of the humanoid robot 1. This determination routine may be executed periodically by interrupting the process, may be executed every time the original work (such as picking work) of the humanoid robot 1 ends a predetermined number of times, or may be executed according to an instruction of an operator.

As illustrated in Fig. 11, in Step 200, the flags (F1 and F2) for identifying the type of function recovery (replacement and cleaning) are reset (0), and then the process proceeds to Step 202 to execute the function determination of the soft material 102.

An example of the function determination includes a case where the adhesive force of the soft material 102 decreases and the gripping (adhesion) of the package 100 fails a predetermined number of times, a case where a physical defect such as a scratch or a chip occurs on the surface of the soft material 102 based on information from the palm sensor 26, and the like.

In Step 202, as a result of the function determination, the grip portion 20 having a deteriorated function is specified, and the type of function recovery is set (set flags F1 and F2).

In the next Step 204, it is determined whether the function of the soft material 102 is normal as a result of the function determination in Step 202.

When an affirmative determination is made at Step 204, the function of soft material 102 is normal and the routine ends.

When a negative determination is made in Step 204, it is determined that the function of the soft material 102 is deteriorated, and the process proceeds to Step 206.

In Step 206, the destination of the humanoid robot 1 is set to the dock station 35, and the process proceeds to Step 208. The humanoid robot 1 receives this command, and goes to dock station 35.

At Step 208, it is determined whether the humanoid robot 1 has arrived at the dock station 35, and if an affirmative determination is made, the process proceeds to Step 210 where an arm portion (grip portion 20 identified at Step 202) to restore the functionality of the soft material 102 is loaded into function recovery dock 38, and the process proceeds to Step 212.

In Step 212, a function recovery determination result (information of flags F1 and F2) and a function recovery process execution instruction are transmitted to the soft material management control device 58, and the process proceeds to Step 214.

In Step 214, it is determined whether or not a docking out instruction transmitted from the soft material management control device 58 has been received after the function recovery process in Fig. 12 described below is completed, and when an affirmative determination is made, the process proceeds to Step 216 to disengage the grip portion 20 from the function recovery dock, and this routine ends. Thus, the humanoid robot 1 returns to the normal work (such as picking work).

### (Soft Material Function Recovery Processing on Dock Station 35 Side)

Fig. 12 is a flowchart illustrating a function recovery process control routine executed by the dock station management control unit 58 in the dock station 35. This routine is activated in response to the function recovery process execution instruction transmitted from Step 212 in Fig. 11.

In Step 250, the state of the flags F1 and F2 received together with the function recovery process execution instruction is determined.

In a case where it is determined in Step 250 that the flag F1=1, it is determined that the replacement process is selected as the function recovery process, and the process proceeds to Step 252. In a case where it is determined in Step 250 that the flag F2=1, it is determined that the cleaning process is selected as the function recovery process, and the process proceeds to Step 254.

In a case where it is determined that the flag F1=0 and the flag F2=0, and in a case where it is determined that the flag F1=1 and the flag F2=1, the flag information error (including communication error) is generated. Therefore, the detailed description is omitted, but an inquiry may be performed against the humanoid robot 1, or a predetermined error processing may be performed.

### [Replacement Process]

When the process proceeds from Step 250 to Step 252, in Step 252, the silicon injection plug 36 is connected to the inlet port 34 of the grip portion 20, and the process proceeds to Step 256.

In Step 256, the removal device 40 is used to remove the existing soft material 102. Examples of the removal means by the removal device 40 include removal by suction, removal by peeling, and removal by a solvent, but the means is not limited as long as the soft material 102 covering the grip portion 20 can be removed.

In the next Step 258, the first blower 46 is operated. By the operation of the first blower 46, the main agent (silicone resin) is taken in from the main agent tank 48 into the fluid pipeline 44, and subsequently the catalyst (curing agent) is taken in from the catalyst tank 50 and supplied as a fluid to the inlet port 34 provided in the main body portion 20A of the grip portion 20 while being stirred. The fluid flowing into the inlet port 34 is discharged from the discharge port 30 to cover the grip portion 20.

In the next Step 260, it is determined whether filling an appropriate amount (capacity enough to cover the grip portion 20 with predetermined thickness) of the fluid is completed, and when an affirmative determination is made, the process proceeds to Step 262 and the operation of the first blower 46 is stopped. After the operation of the first blower 46 is stopped, the fluid is gradually cured and changes to a gel state in which the surface has adhesiveness.

Note that the fluid remaining in the introduction path 32 of the grip portion 20 and the fluid pipeline 44 is preferably removed before curing, for example, by flowing back and discharging by opening a check valve or the like (not illustrated).

In the next Step 264, it is determined whether curing of the fluid covering the grip portion 20 has been confirmed. This curing may be confirmed, for example, after a lapse of a predetermined time, or based on a result of monitoring with a sensor or the like as appropriate.

When the affirmative determination is made in Step 264, the process proceeds to Step 266 to disconnect the silicon injection plug 36, and then the process proceeds to Step 268 to output the docking out instruction to the humanoid robot 1, and this routine ends.

### "Cleaning Process"

When the process proceeds from Step 250 to Step 254, in Step 254, the second blower 54 is operated to start discharging the cleaning solution.

That is, when the second blower 54 is driven, the cleaning solution is taken into the cleaning solution pipeline 52 from the cleaning solution tank 56 and supplied to the function recovery dock 38.

With this cleaning solution, the surface of the soft material 102 covering the main body portion 20A of the grip portion 20 stored in the function recovery dock 38 is cleaned, and the adhesive function is recovered.

Note that the cleaning solution sent into the function recovery dock 38 may be discharged by a drain pipe (not illustrated) or the like, but is preferably collected by the removal device 40.

In the next Step 270, it is determined whether or not a predetermined time (time required for cleaning) has elapsed, and when an affirmative determination is made, the process proceeds to Step 272, the operation of the second blower 54 is stopped (discharge of cleaning solution is finished), and the process proceeds to Step 268.

Note that the cleaning solution remaining in the pipeline or the like of the cleaning device 52 may be retained as long as the cleaning solution does not have a property of being cured, but for example, the cleaning solution may be discharged by being reversely flowed by opening a check valve or the like (not illustrated).

As described above, in the second embodiment, in a case where the function of the soft material 102 attached to the grip portion 20 as an aid of adhesion of the suction pad 24 is deteriorated when the package 100 is gripped by the grip portion 20, the function can be recovered by executing the replacement processing or the cleaning processing according to the frequency of the functional deterioration.

In the second embodiment, the function determination is performed by the information processing device 14 of each humanoid robot 1 (see flowchart in Fig. 11), and the recovery process is performed by the dock station management control unit 58 of the dock station 35. Alternatively, each humanoid robot 1 may have a recovery process function.

For example, a portable cartridge or the like filled with single-use portion of main agent and catalyst at a predetermined pressure may be stored in an arm portion or the like of the humanoid robot 1. In addition, the soft material 102 can be replaced by attaching a switching valve to the inlet port 34, switching the switching valve to the input side, sucking and removing the existing soft material, switching the switching valve to the output side, and injecting the soft material into the inlet port 34 of the grip portion 20 as necessary.

In the case of cleaning, the cleaning can be realized by spraying the cleaning solution to the grip portion 20 or by placing the grip portion 20 in a storage tank in which the cleaning solution is stored. As the cleaning solution, a special liquid agent that easily recovers adhesive force may be used in addition to the water and neutral detergent (which may be diluted with water) described above as long as dust adhering to the surface can be removed. When a special liquid agent is used, it is preferable to use the liquid preparation in due consideration of a disposal procedure (dilution treatment, chemical reaction treatment, or the like) depending on the component.

In addition, a robot dedicated to the recovery process may be deployed to approach the humanoid robot 1 in which the function of the soft material 102 is deteriorated, and the function recovery process may be executed at the work base of the humanoid robot 1.

### [Third Embodiment]

Hereinafter, a third embodiment of the disclosure will be described. In the third embodiment, the same components as those in the first and second embodiments are denoted by the same reference numerals, and the description of the configurations is omitted.

The high-resolution camera included in the palm sensor 26 of the third embodiment identifies what the captured package 100 is, whether it is a care product such as a shampoo, a conditioner, a cosmetic, or a toothpaste, or a food product such as a cup noodle or a confectionery bag, on the basis of captured image information.

In other words, the high-resolution camera has a role of acquiring information for specifying the type (shape, size, hardness, and the like) of the package 100.

On the other hand, the MoPU included in the palm sensor 26 of the third embodiment together with the high-resolution camera outputs the motion information indicating the captured motion (in this case, the movement is relative to the arm portions 15, 16, and 17) of the package 100 from the image of the package 100 captured at a frame rate of 1000 frames/second or more, for example, at a frame rate of 1000 frames/second or more. Note that the frame rate may be increased in a case where the package 100 being moved is detected, and the frame rate may be decreased in a case where a fixed object (the package 100 not moving) is detected.

The MoPU outputs vector information of a motion along a predetermined coordinate axis of a point indicating the location of the package 100 as motion information. That is, the motion information output from the MoPU does not include information necessary for identifying what the captured package 100 (the care product and the food) is, and includes only information indicating the motion (moving direction and moving speed) on the coordinate axis (x-axis, y-axis, and z-axis) of the center point (or the center of gravity) of the package 100.

That is, it is possible to accurately guide the trajectory when the grip portion 20 approaches the package 100.

The palm sensor 26 (high-resolution camera and MoPU) is a sensor provided in the grip portion 20 of the arm portions 15, 16, and 17, and has a camera function of capturing the package 100 and a position specifying function of specifying the position of the package 100 separately from the sensor 12. By analyzing the information (detection information) acquired by the camera function and the position specifying function, detailed information (shape (outer shape), position, character information (for example, information indicated as "FRAGILE") described on a seal or the like attached to the packaging of the package 100, and the like) of the package 100 are grasped.

The grip portion 20 having an appropriate size is selected on the basis of the grasped information on the package 100. For example, in a case where a seal described as "FRAGILE" is attached as character information, by detecting the character information with the palm sensor 26 (in particular, a high-resolution camera), it can be grasped that a fragile object may be packed and a care must be taken to vibration and impact more than other packages 100.

### (Accuracy Monitoring of Palm Sensor 26)

Detection information by the palm sensor 26 attached to each of the grip portions 20 is important for selection of the grip portion 20 for gripping the package 100.

However, the soft material 102 is laid around the palm sensor 26 attached to the selected grip portion 20, and over time, there are pieces of the soft material 102 that are peeled off due to rubbing or the like on the surface of the soft material 102, or dust attached to the soft material 102.

Therefore, as compared with a case where the soft material 102 is not laid around the palm sensor, an environment is obtained in which chips or dust is likely to adhere to the sensor surface (lens portion or the like) of the palm sensor 26 by some impact. If the piece or dust adheres to the sensor surface, the detection information may not be accurately acquired.

Therefore, in the control unit 142 of the third embodiment, control for monitoring the palm sensor 26 was made to interrupt the grip control regularly or irregularly.

In this interrupt control, the accuracy of the detection information of the palm sensor 26 is grasped, and the pass/fail of the accuracy is determined. In a case of the fail, a command is issued to use the palm sensor 26 of the grip portion 20 that has not been selected as a support sensor.

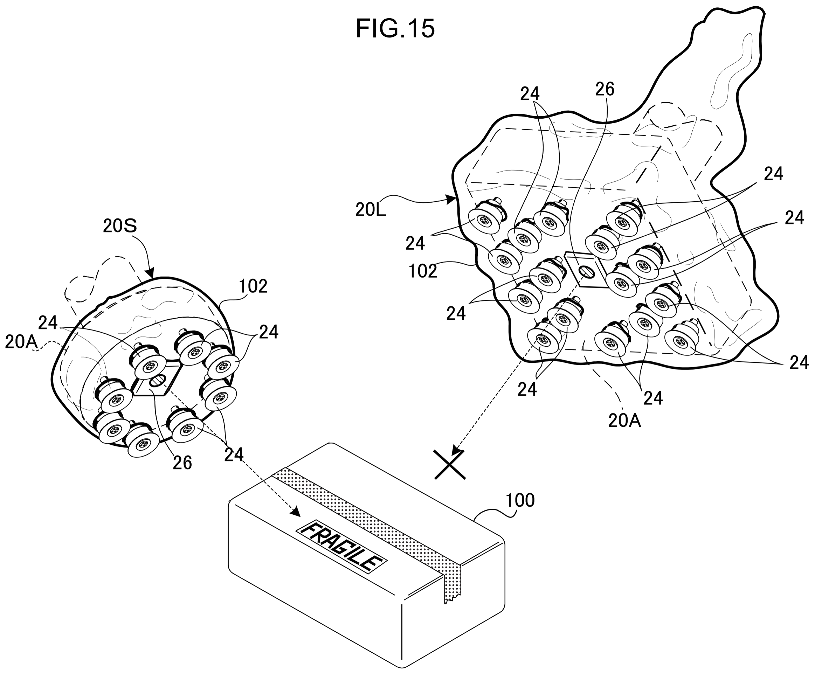

As a result, as illustrated in Fig. 15, in addition to the grip portion 20 (here, grip portion 20L) to grip the package 100, a grip portion 20 (here, grip portion 20S) functioning as a support sensor faces the package 100, and the grip control of the grip portion 20L is executed on the basis of the detection information of the palm sensor 26 of the grip portion 20S.

### (Grip Control of Package 100)

Hereinafter, the grip control of the package 100 executed by the control unit 142 will be described.

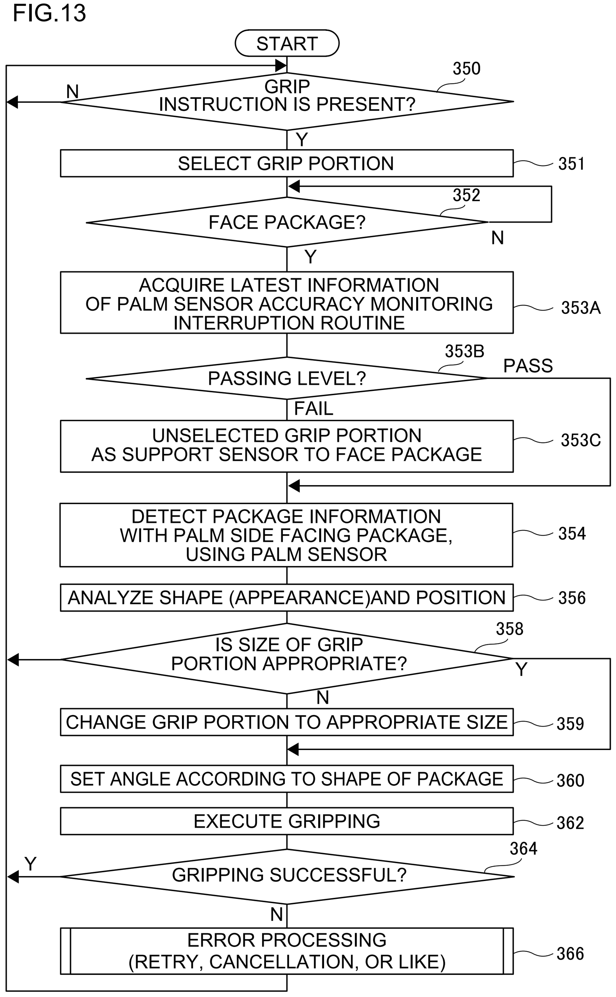

Fig. 13 is a flowchart illustrating a procedure of the grip control in the third embodiment when gripping the package 100 by selecting the grip portions 20S, 20M, and 20L in Figs. 3 and 4 in conjunction with the overall operation of the humanoid robot 1.

In Step 350, it is determined whether or not there is an instruction to grip the package 100, and when an affirmative determination is made, the process proceeds to Step 351 and the grip portion 20 is selected. Note that the initial selection of the grip portion 20 may be fixedly determined in advance or may be random. Furthermore, if the information regarding the package 100 (for example, contents and the like) can be grasped in advance, the grip portion 20 predicted to be optimal may be selected using the information regarding the package 100.

In next Step 352, the humanoid robot 1 is moved (for example, any one of arm portions 15, 16, and 17 is operated), whether the humanoid robot 1 faces the target package 100 is determined, and when an affirmative determination is made, the process proceeds to Step 153A.

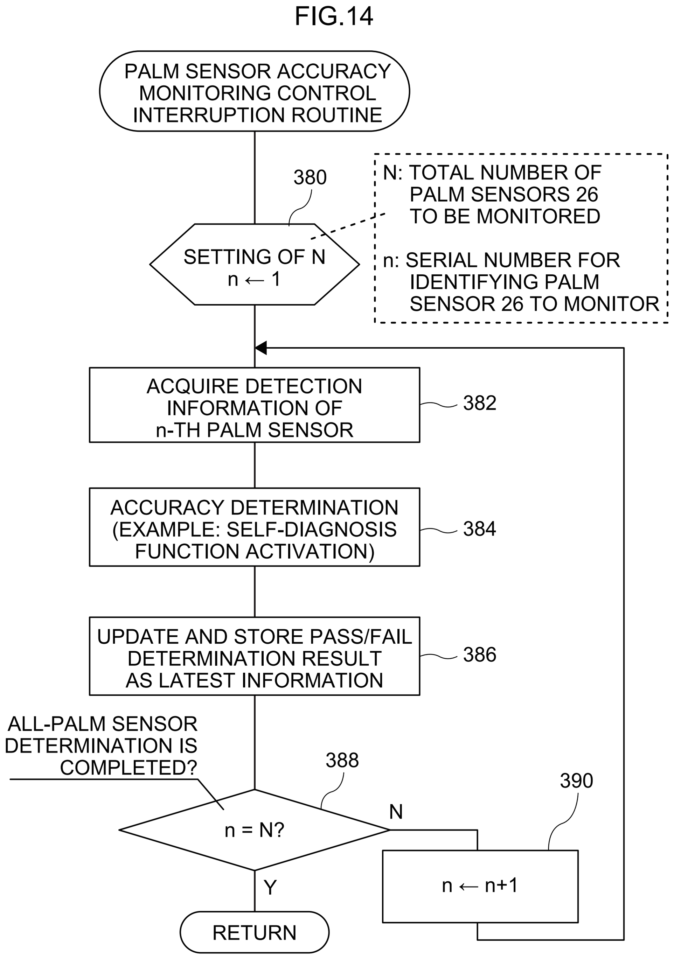

In Step 353A, the latest information by processing of a palm sensor accuracy monitoring interruption routine (to be described below in detail) illustrated in Fig. 14 is acquired, the process proceeds to Step 353B, and it is determined whether or not the accuracy of the palm sensor 26 of the selected grip portion 20 is at an acceptable level.

In a case where it is determined as fail in Step 353B, the processing proceeds to Step 353C, and the palm sensor 26 attached to the grip portion 20 that is not selected (unselected) is caused to face the package 100 as a support sensor (as an example, palm sensor 26 of grip portion 20S illustrated in Fig. 15), and the processing proceeds to Step 354.

In addition, in a case where it is determined as pass in Step 353B, the process proceeds to Step 354.

In Step 354, information on the package 100 is detected with the palm side 20A facing the package, using the palm sensor 26 (detection information acquisition).

In the next Step 356, the detection information by the palm sensor 26 (high-resolution camera and MoPU) is analyzed, and the information regarding the package 100 (type information (shape, size, hardness, and the like) of package 100, position information, and character information ("FRAGILE" or the like) attached to package) is grasped in detail, and the process proceeds to Step 358.

In Step 358, it is determined whether or not the size of the grip portion 20 is appropriate for the package 100. When it is determined in Step 358 that the size is inappropriate (negative determination), the processing proceeds to Step 359, and the size is changed to the arm portion 15, 16, or 17 of the appropriate size, and the processing proceeds to Step 360.

When it is determined in Step 358 that the size is appropriate (affirmative determination), the process proceeds to Step 360.

In Step 360, the angles of the grip portion 20S of the arm portion 15, the grip portion 20M of the arm portion 16, and the grip portion 20L of the arm portion 17 according to the shape of the package 100 are set, and the process proceeds to Step 362.

In Step 362, gripping of the package 100 is executed.

Here, in the third embodiment, since the grip portion 20 is covered with the soft material 102, the soft material 102 comes into contact with the package 100, deforms in accordance with the shape of the package 100, and comes into close contact with the package 100 at the time of the suction processing of the suction pad 24.

In the next Step 364, it is determined whether or not the gripping of the package 100 has succeeded. In a case where an affirmative determination is made, the gripped package 100 is carried to a predetermined place, and the process proceeds to Step 350 and waits for an instruction to grip the next package 100.

In addition, in a case where a negative determination is made in Step 364, the process proceeds to Step 366, error processing (for example, retry or cancellation) is executed, and the process returns to Step 350.

### (Palm Sensor Accuracy Monitoring Control)

The detection information by the palm sensor 26 is important for determining appropriateness of selection of the grip portion 20 when gripping the package 100 (see Step 358 and the like in Fig. 13), and if the detection information cannot be accurately acquired, it is difficult to select an appropriate grip portion 20.

Therefore, the palm sensor 26 is monitored by the palm sensor accuracy monitoring interruption routine, and pass/fail information used in Step 353B of Fig. 13 is formulated.

Fig. 14 is a flowchart illustrating a palm sensor accuracy monitoring control interruption routine for monitoring the palm sensor 26 by regularly or irregularly interrupting the grip control of the package 100 illustrated in Fig. 13 executed by the control unit 142.

The term "periodic" may mean every fixed time, or may mean every end of one or a plurality of jobs. In addition, the term "irregular" may mean the time of instruction by the operator, for example, when a package 100 that is highly likely to be contaminated, such as fresh products, is gripped.

In Step 380, a variable N corresponding to the number of palm sensors 26 to be monitored is set, and a variable n (sequential number of monitoring order) for identifying the palm sensor 26 to be monitored is reset to 1. Next, the process proceeds to Step 382, and detection information of the n-th palm sensor 26 is captured, and the process proceeds to Step 384.

In Step 384, accuracy determination is performed based on the detection information. In the accuracy determination, for example, pass/fail ("pass" or "fail") of the palm sensor 26 is determined by a pre-programmed self-diagnosis function (to be described below in detail).

In the next Step 386, the pass/fail determination in Step 384 is updated and stored as the latest information, and the process proceeds to Step 388.

In Step 388, it is determined whether or not the variable n for identifying the monitoring target has reached the set number N of the palm sensors 26 to be monitored (whether or not self-diagnosis of all the palm sensors 26 to be monitored has ended), and when an affirmative determination is made, this routine ends.

When a negative determination is made in Step 388, the process proceeds to Step 390, the variable n is incremented (n←n+1), the process returns to Step 382, and the above process is repeated.

In the third embodiment, as a substitute for failed palm sensor 26, a palm sensor 26 attached to another grip portion 20 of the humanoid robot 1 itself to which a failed palm sensor 26 is attached is used. However, a palm sensor 26 of another humanoid robot 1 may be substituted by calling another humanoid robot 1 (calling adjacent humanoid robot 1 or the like).

### (Self-Diagnosis Function)

The self-diagnosis function is a function of self-diagnosing and notifying a margin for an environmental change or the like after installation of the sensor. This is effective as one method capable of early detecting contamination of the sensor surface, optical axis deviation, and the like due to failure or aging.

An example of activation of the self-determination function is a function for notifying a change from a stable state to an unstable state of the output of the sensor, and when the unstable state of the output continues for a certain period (about 0.3 seconds or the like), it may be diagnosed as "fail", and when the output is stable, it may be diagnosed as "pass".

The stable state and the unstable state will be described using the light reception amount that is one of pieces of the detection information of the palm sensor 26 as an example.

The stable state is regarded as a stable state (stable light entry) when the light reception amount is about 1.2 times or more the operation level at the time of light entry, and is regarded as a stable state (stable light blocking) when the light reception amount is about 0.8 times or less the operation level at the time of light blocking.

On the other hand, the unstable state is regarded as an unstable state when the light reception amount is about 0.8 times to about 1.2 times the operation level.

Note that the numerical values (0.8, 1.2, or the like) for determining the stable state and the unstable state are merely examples, and are not intended to limit at all.

Furthermore, in the third embodiment, the pass/fail of the palm sensor 26 is determined using a self-diagnosis function programmed in advance. However, detection information of the same object (image) may be acquired by a plurality of the palm sensors 26, and the plurality of pieces of detection information may be compared to determine the pass/fail of the palm sensor 26.

Furthermore, the pass/fail may be determined by comparing the detection information with numerical information serving as a reference, such as white balance in an image.

### (Second Modification)

Fig. 15 is a perspective view illustrating a state in which a palm sensor of another grip portion faces the package as a support sensor when the palm sensor of one grip portion fails according to the third embodiment.

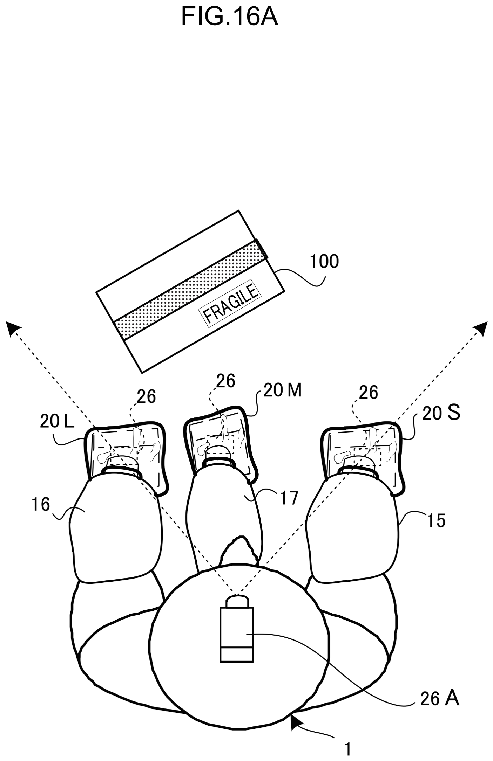

Fig. 16(A) illustrates the humanoid robot 1 according to the third embodiment, in which a rectangular grip portion 20 (20S, 20L, and 20M) is attached to each of arm portions 15, 16, and 17.

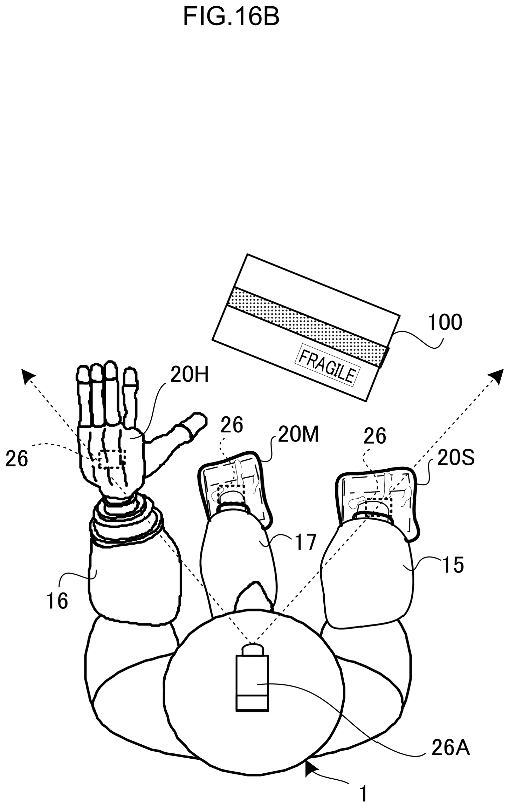

Fig. 16(B) illustrates the humanoid robot 1 according to a first modification of the third embodiment, to which a grip portion 20H having a structure imitating a shape of a human hand is attached.

As illustrated in Figs. 16(A) and 16(B), a dedicated support camera 26A is attached to the head of the humanoid robot 1, and is used in place of the failed palm sensor 26 when failed in Step 353B of Fig. 13.

Compared to the palm sensor 26, since the detection information is acquired from the package 100 in the overhead view, the accuracy of the detection information is poor, but versatility can be enhanced.

Note that, in the third embodiment (including first modification and second modification), when the palm sensor 26 attached to the selected grip portion 20 fails, the palm sensor 26 of another grip portion 20 or the support sensor 26A is used. However, the periphery (for example, adjacent humanoid robot 1 or the like) may be constantly monitored at a portion corresponding to the back of the hand of the grip portion 20.

### [Fourth Embodiment]

Hereinafter, a fourth embodiment of the disclosure will be described. In the fourth embodiment, the same components as those in the first to third embodiments are denoted by the same reference numerals, and the description of the configurations is omitted.

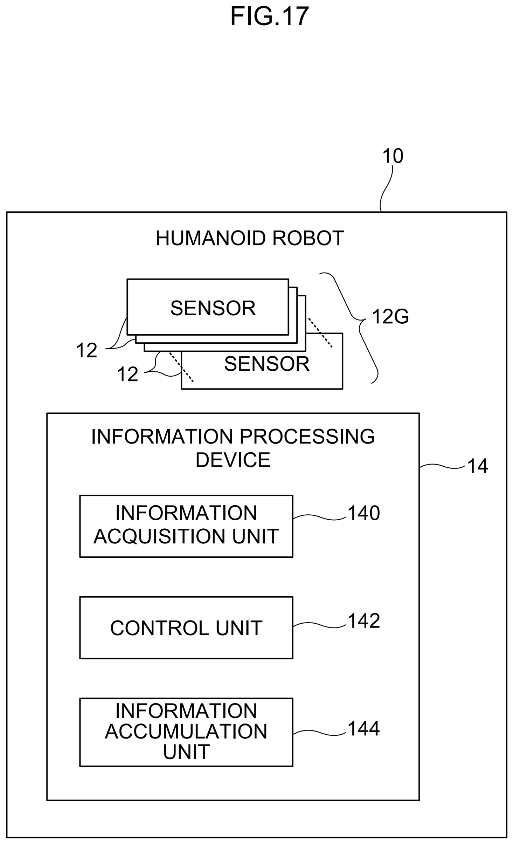

Fig. 17 is a schematic view illustrating an example of the control system of the humanoid robot of the fourth embodiment. The control system 10 includes a sensor group 12G mounted on the humanoid robot 1 and the information processing device 14. Note that the sensor group 12G is a generic term for a plurality of types of sensors 12 having different detection functions.

For example, the sensor group 12G is intensively disposed in the region corresponding to the face of the humanoid robot 1, and sequentially acquires the information indicating at least the distance and the angle between the package 100 around the humanoid robot 1 that the humanoid robot 1 works on and the arm portions 15, 16, and 17. Each sensor 12 is not limited to the region corresponding to the face of humanoid robot 1, but may be disposed at an appropriate position of the whole body of humanoid robot 1 based on each detection function, for example.

As the detection function of each sensor 12, various functions of a highest-performance camera, a solid-state LiDAR, a multi-color laser coaxial displacement meter, or the like can be adopted.

In addition, examples of detection function of the sensor 12 belonging to the sensor group 12G include a vibratory meter, a thermo camera, a hardness meter, radar, LiDAR, a high-pixel, telephoto, ultra-wide angle, 360 degrees, high-performance camera, vision recognition, fine sound, ultrasonic wave, vibration, infrared ray, ultraviolet ray, electromagnetic wave, temperature, humidity, spot AI weather forecast, high-accuracy multi-channel GPS, low-altitude satellite information, long tail incident AI data, and the like.

In addition to the above-described information, the sensor 12 belonging to the sensor group 12G may detect an image, a distance, vibration, heat, smell, color, sound, ultrasonic wave, ultraviolet ray, infrared ray, or the like. A first function determined from the information detected by the sensor 12 belonging to the sensor group 12G is a function of controlling the operation of the humanoid robot 1, and examples of the first function include the movement of the center of gravity of the humanoid robot 1, the detection of the material of the floor on which the humanoid robot 1 is installed, the detection of the outside air temperature, the detection of the outside air humidity, the detection of the vertical and lateral oblique inclination angle of the floor, and the detection of the moisture content (corresponding to external information of the disclosure).

In addition to the first function (motion control of humanoid robot 1), the sensor group 12G of the fourth embodiment has, as a second function, a function of identifying the type of package 100 that is the object of the disclosure. In the second function (identification of package 100), for example, if there is a camera function, it is possible to identify what the captured package 100 is, whether it is a care product such as a shampoo, a conditioner, a cosmetic, or a toothpaste, or a food product such as a cup noodle or a confectionery bag, on the basis of captured image information (corresponding to object information of the disclosure). Furthermore, as another example of the second function, if there are a smell detection function and a temperature detection function, it is possible to predict that there is a high possibility of being a fresh food item by the smell and the temperature (corresponding to object information of the disclosure) emitted from the fresh food item 110.

Each sensor 12 performs these detections, for example, every nanosecond.

The information processing device 14 includes an information acquisition unit 140, a control unit 142, and an information accumulation unit 144.

The information acquisition unit 140 acquires information of the package 100 detected by the sensors 12 belonging to the sensor group 12G.

The control unit 142 uses the information acquired by the information acquisition unit 140 from the sensor 12 belonging to the sensor group 12G and an artificial intelligence (AI) to control the rotation operation of the connecting portion 4, the movement operation in the vertical direction, the operations of the arm portions 5 and 6, and the like.

In addition, in the fourth embodiment, the second function of the sensor group 12G may determine, in addition to the identification of the package 100, the manner of gripping by the appropriate grip portion 20 (grip portion 20S, grip portion 20M, or grip portion 20L) for gripping the package 100 (gripping, adhesion, suction, and the like). In order to determine the manner of gripping by the grip portion 20, some or all of the sensors 12 of the sensor group 12G are selectively applied.

In other words, the grip portion 20 does not have a dedicated sensor for determining how to grip the package 100 when gripped by the grip portion 20 (sensorless grip portion).

The information processing device 14 specifies the position of the package 100 on the basis of the information from the sensor group 12G, calculates the strength at the time of gripping, the suction force, and the like, controls minute movements of the arm portions 15, 16, and 17 and the grip portion 20, and supports work (picking work, packing work, or the like) for various packages 100.

At this time, in the sensor group 12G, a gripping manner (gripping, adhesion, suction, and the like) serves to identify the special package 100.

The special package 100 is a generic term for packages 100 for which selection of the grip portion 20 or the like is uncertain only by appearance (shape) and weight. Examples of the special package 100 include fresh food items on a food tray, unpacked traditional craft products and works of art, precious metals, glass products, animals and plants, and the like, which are easily deformed, broken, or damaged by gripping.

The determination of the presence or absence of the special package 100 is made based on whether or not the detection information of the sensor group 12G is in a normal detection range (normal or abnormal) predetermined by each sensor 12.

That is, in the case of a box such as cardboard, a hard housing having many flat surfaces, and a package having no smell at room temperature, the detection value falls within a predetermined detection range (classified as normal value sensor).

On the other hand, if there is non-packaging, low flatness, high or low temperature, smell, or the like, there is a case where the detection deviates from the normal detection range (classified as deviation value sensor).

Therefore, the type of the package 100 is specified from the sensor group 12G on the basis of the detection information of the sensor 12 classified as the deviation value sensor.

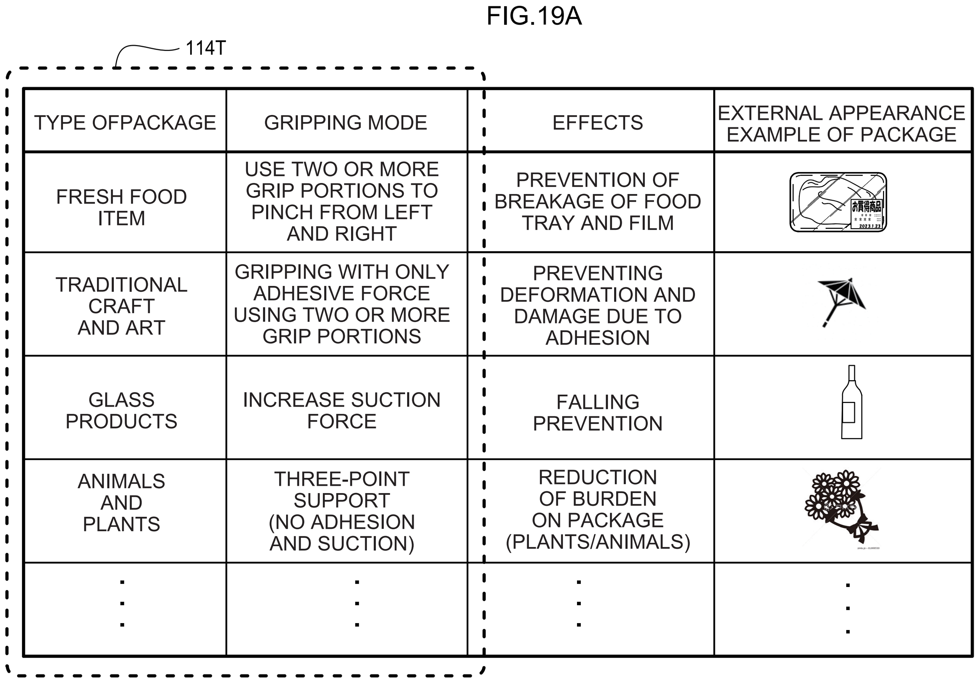

The identified type of the package 100 is associated with the gripping form in advance, and is stored in the information accumulation unit 144 (see Fig. 17) as a type-gripping form table 144T (see part of Fig. 19(A), left column of Table 1).

The gripping form includes the number of target gripping, a gripping position, and the like in addition to the above-described gripping manner (gripping, adhesion, and suction).

Therefore, the gripping form of the special package 100 is set on the basis of this type-gripping form table 144T, and the gripping is controlled on the basis of the set gripping form, thereby providing respective functions and effects (see right column of Table 1).

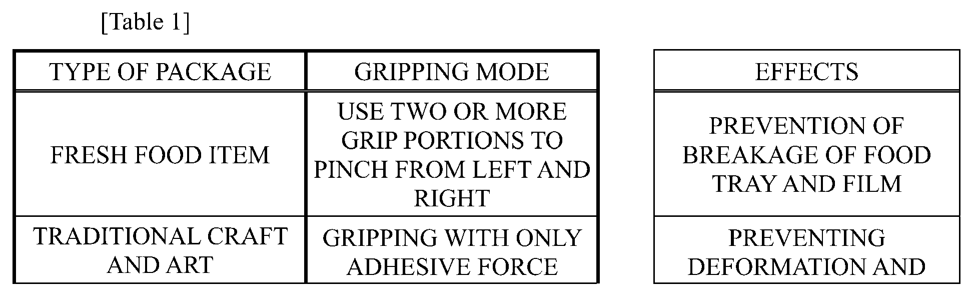

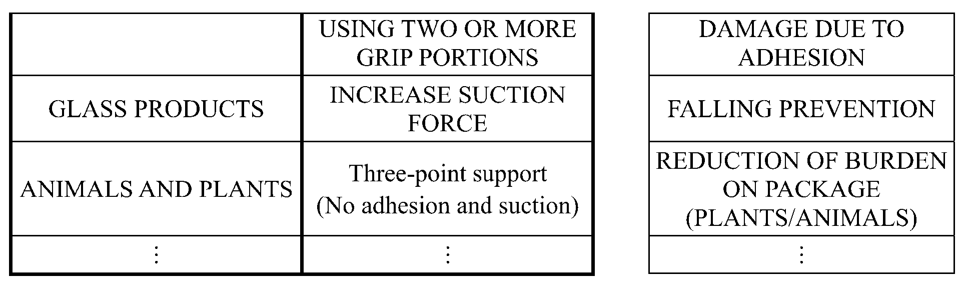

In the fourth embodiment, as an example of the special package 100, a fresh food item (see top row of Table 1) will be exemplified below, and a response thereof will be described.

### (Gripping of Fresh Food Item)

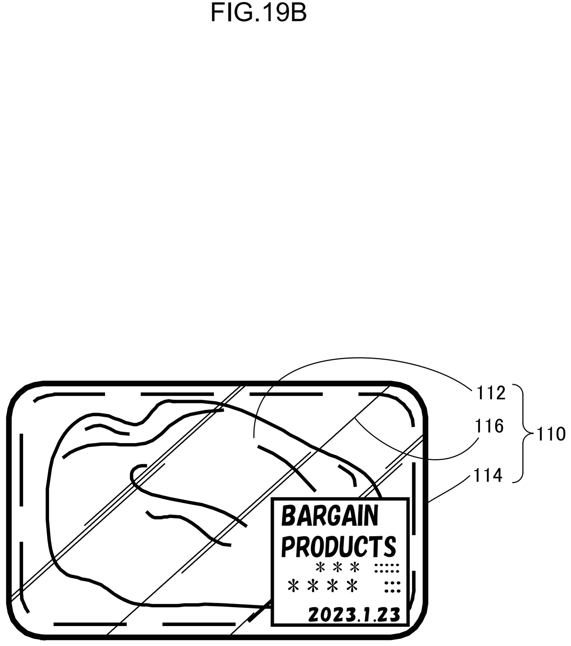

As illustrated in Fig. 19(B), as one form of a gripping target (package 100) using the grip portion 20S, the grip portion 20M, and the grip portion 20L in the fourth embodiment, there is a fresh food item 110 (fresh fish, fresh meat, or the like).

In general, a main body 112 (in Fig. 19, meat) of the fresh food item 110 is placed on a food tray 114, and the upper portion thereof is covered with the transparent and thin-walled film 116 (wrap). Therefore, in a case where the fresh food is gripped by the grip portion 20, it is necessary to consider hardness (softness and ease of deformation) of the main body 112, brittleness of the food tray 114, ease of tearing of the film 116, and the like. For example, when the film 116 is damaged, leakage of contents in the food tray may adversely affect an electronic device of the humanoid robot 1 itself.

For this reason, the fresh food item 110, which is one of the packages 100, needs to be handled gently with great care as compared with the other packages 100, such as not losing the original shape, in distinction from the packages 100 other than the fresh food item 110.

Therefore, the sensor 12 capable of identifying the fresh food item 110 is determined from the sensor group 12G on the basis of the following selection conditions.

(Selection Condition 1) The fresh food item 110 may release a smell peculiar to the fresh food item 110 through the film 116.

(Selection Condition 2) There is a case where the fresh food items 110 are refrigerated or frozen for maintaining freshness, and the temperature of the fresh food items is different from the temperature of other package (normal temperature storage).

Therefore, the detection values of the sensor 12 having a smell detection function and the sensor 12 having a temperature detection function deviate from a predetermined detection range (deviation value sensor), and the type (here, fresh food item 110) of the package 100 is specified on the basis of the detection value of the deviation value sensor.

In the smell detection sensor which is the sensor 12 having a smell detection function, it is possible to predict that there is a high possibility of being a fresh food item by the smell emitted from the fresh food item 110.

In the infrared detection sensor which is the sensor 12 having an infrared detection function, it can be predicted from the detection result that there is a high possibility of being a fresh food item according to the temperature difference from the surroundings.

In a case where it is predicted that the package 100 is the fresh food item 110 on the basis of the detection information from the smell detection sensor and the infrared detection sensor, the gripping form (including gripping manner (gripping, adhesion, and suction), the number of target grips, gripping position, and the like) is strictly set on the basis of the type-gripping form table illustrated in Table 1, and the grip control is executed so as not to disturb the original shape of the main body 112 or damage the food tray 114 or the film 116.

Note that, although the smell detection function and the infrared detection function are applied to the identification of the fresh food item 110 as one form, the present invention is not limited to these functions, and may be changed from or added to the sensor 12 having other functions.

The operation of the fourth embodiment will be described below.

The control unit 142 executes the following processes as an overall operation.
(1) The connecting portion 4 is driven so that the package 100 on the shelf and the floor can be picked up, and the upper body portion 2 is tilted forward or backward.
(2) The arm portions 15, 16, and 17 and the grip portion 20 are driven so that the package 100 can be gripped.
(3) The upper body portion 2 is driven up and down with respect to the leg portion 3 so as to match the height of the workbench of the production line.
(4) In order to prevent humanoid robot 1 from falling, a balance is taken.
(5) Driving of the wheels 7 and 8 is controlled such that humanoid robot 1 can push the cart or the like.

For example, when picking up the package 100 on the floor, the information processing device 14 repeatedly executes the flowchart illustrated in Fig. 6.

In Step S100, the information acquisition unit 140 acquires information of the package 100 detected by the sensor group 12G.

In Step S102, the control unit 142 controls the connecting portion 4 and the arm portions 15, 16, and 17 using the information of the package 100 acquired in Step S100 and the AI, thereby picking up the package 100 on the floor.

In Step S104, the control unit 142 moves the picked up package 100 to a predetermined position.

According to the fourth embodiment, the humanoid robot 1 includes the upper body portion 2, the leg portion 3, and the connecting portion 4 that rotatably connects the upper body portion 2 and the leg portion 3. In addition, the rotation of the connecting portion 4 is controlled on the basis of the information acquired by the sensor group 12G. Therefore, a distance and an angle between the humanoid robot 1 and the package 100 can be determined, so that the action of picking up package 100 on the floor can be performed.

In addition, since the connecting portion 4 can change the distance between the upper body portion 2 and the leg portion 3, the position of the upper body portion 2 in the vertical direction with respect to the leg portion 3 can be adjusted so as to match the height of the workbench in the production line.

The leg portion 3 has a balance function for preventing the humanoid robot 1 from falling when the upper body portion 2 tilts forward or succeeds the leg portion 3. Therefore, it is possible to prevent humanoid robot 1 from falling down when the work of pushing or pulling the package 100 on the production line is performed. Therefore, it is possible to prevent a failure of the humanoid robot 1 due to the falling or an injury of a person around the humanoid robot 1.

### (Grip Control of Package 100)

Hereinafter, the grip control of the package 100 executed by the control unit 142 will be described.

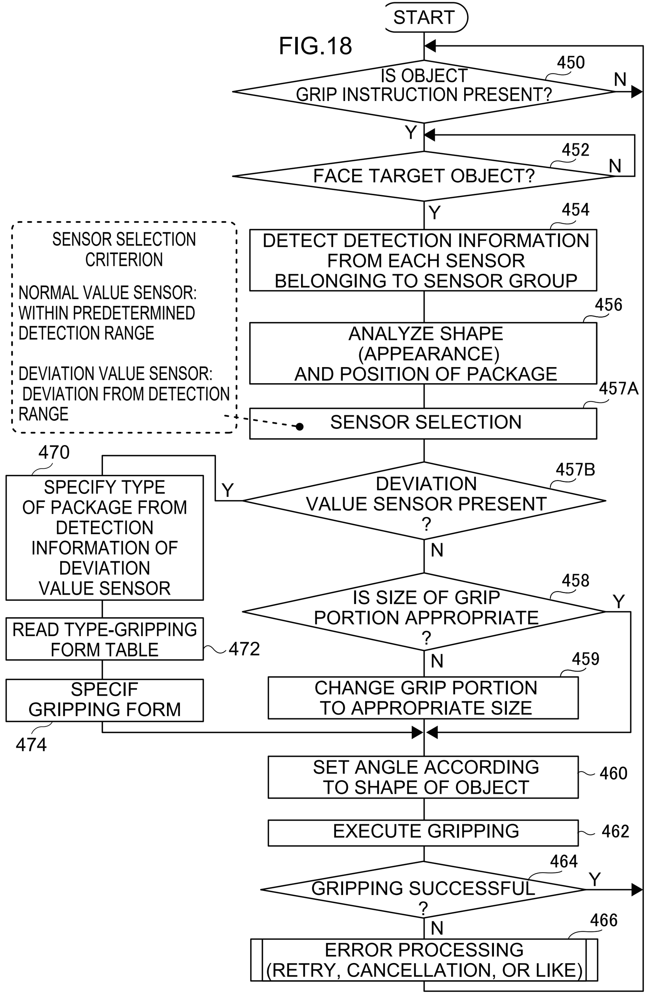

Fig. 18 is a flowchart illustrating a procedure of the grip control in the fourth embodiment when grip portions 20S, 20M, and 20L in Figs. 3 and 4 are selected in conjunction with the overall operation of the humanoid robot 1 to grip the package 100.

In Step 450, it is determined whether or not there is an instruction to grip the package 100, and when an affirmative determination is made, the process proceeds to Step 451 and the grip portion 20 is selected. Note that the initial selection of the grip portion 20 may be fixedly determined in advance or may be random. Furthermore, if the information regarding the package 100 (for example, contents and the like) can be grasped in advance, the grip portion 20 predicted to be optimal may be selected using the information regarding the package 100.

In next Step 452, the humanoid robot 1 is moved (for example, any one of arm portions 15, 16, and 17 is operated), and whether the humanoid robot 1 faces target package 100 is determined. When an affirmative determination is made, the process proceeds to Step 454.

In Step 454, the information on the package 100 is detected using each sensor 12 belonging to the sensor group 12G (detection information acquisition).

In the next Step 456, the detection information by the sensor group 12G is analyzed, and the information regarding the package 100 (type information (shape, size, hardness, and the like) and the position information of package 100) is grasped in detail, and the process proceeds to Step 457A.

In Step 457A, sensor selection is performed. In the sensor selection, when detection information (detection value) of each sensor 12 by the sensor group 12G is within a predetermined detection range, the sensor is classified as a normal value sensor, and when the detection information deviates from the predetermined detection range, the sensor is classified as a deviation value sensor.

In the next Step 457B, it is determined whether or not there is a sensor 12 classified as a deviation sensor, and when a negative determination is made, it is determined that the detection values of all the sensors 12 of the sensor group 12G are normal value sensors, and the processing proceeds to Step 458 to execute normal grip control.

In addition, in a case where an affirmative determination is made in Step 457B, it is determined that there is the sensor 12 classified as the deviation sensor, and the processing proceeds to Step 470 in order to execute the special grip control for gripping a special package.

### (Normal Grip Control)

In Step 458, to which the process proceeds when a negative determination is made in Step 457B, it is determined whether or not the size of the grip portion 20 is appropriate for the package 100. When it is determined in Step 458 that the size is inappropriate (negative determination), the processing proceeds to Step 459, and the size is changed to the arm portion 15, 16, or 17 of the appropriate size, and the processing proceeds to Step 460.

When it is determined in Step 458 that the size is appropriate (affirmative determination), the process proceeds to Step 460.

### (Special Grip Control)

In Step 470, to which the process proceeds when an affirmative determination is made in Step 457B, the type of the package 100 is specified from the detection information of the sensor 12 classified as the deviation value sensor (for example, fresh food item 110 illustrated in Fig. 19(B) is specified).

In the next Step 472, the type-gripping form table 144T (see Table 1 and Fig. 19(A)) of the package 100 stored in the information accumulation unit 144 of the information processing device 14 is read, and then the process proceeds to Step 474. The gripping form is specified on the basis of the type-gripping form table 144T, and the process proceeds to Step 460.

(Fresh Food Item 110) In a case where the type of the package 100 is the fresh food item 110, the grip control of using two or more grip portions 20 to pinch from the left and right is specified from the type-gripping form table 144T. This prevents the food tray 114 and the film 116 from being damaged, which may be caused by adhesion or suction.

In addition, in each of the other special types of the packages 100, as described below, a gripping form is set in advance, and effects are provided.

### (Traditional Craft and Art) For example, umbrellas or the like

By using two or more grip portions and gripping with only adhesive force, deformation and breakage due to suction can be prevented.

### (Glass Product) For example, wine bottle or the like

By increasing the suction force, falling can be prevented.

### (Animals and Plants) For example, a flower bundle or the like

By setting the three-point support, and the adhesion and suction to "none", it is possible to reduce the burden on plants and animals.

In Step 460, the angles of the grip portion 20S of the arm portion 15, the grip portion 20M of the arm portion 16, and the grip portion 20L of the arm portion 17 according to the shape of the package 100 are set, and the process proceeds to Step 462. In Step 462, gripping of the package 100 is executed.

Here, in the fourth embodiment, since the grip portion 20 is covered with the soft material 102, the soft material 102 comes into contact with the package 100, deforms in accordance with the shape of the package 100, and comes into close contact with the package 100 at the time of the suction processing of the suction pad 24. In the case of the special grip control, depending on the type of the package 100, the gripping by suction and/or adhesion may not be executed.

In the next Step 464, it is determined whether or not the gripping of the package 100 has succeeded. In a case where an affirmative determination is made, the gripped package 100 is carried to a predetermined place, and the process proceeds to Step 450 and waits for an instruction to grip the next package 100.

In addition, in a case where a negative determination is made in Step 464, the process proceeds to Step 466, error processing (for example, retry or cancellation) is executed, and the process returns to Step 450.

As described above, according to the fourth embodiment, since the grip portion 20 is covered with the soft material 102, the soft material 102 is brought into close contact with the package 100 at the time of suction by the plurality of suction pads 24, and thus, it is possible to reliably hold the package 100 by being used as an auxiliary holding force at the time of suctioning the package 100 in the air suction structure of the suction pad 24, for example.

That is, in the soft material 102, the near-point contact of the suction pad 24 with respect to the package 100 is replaced with the surface contact, and thus, it is possible to stabilize the holding force of the package 100, and it is possible to prevent a problem such as falling off due to vibration during movement in advance.

In addition, even if the package 100 is accommodated in a narrow tote and the suction pad 24 cannot be positioned as desired, the package can be reliably suctioned by the suction pad 24 after being adhered to and pulled out by the soft material 102.

Furthermore, in the fourth embodiment, on the basis of the detection information of the sensor group 12G, the object is classified into a normal value sensor and a deviation value sensor, and in a case where there is a deviation value sensor, it is possible to prevent damage, deformation, and the like of the target package 100 by performing the special grip control.

Note that, in the fourth embodiment, as the type of the package for executing the special grip control, in addition to the fresh food item 110, a traditional craft product, an art product, a glass product, or an animal and plant product has been exemplified (see Fig. 19(A)). However, a sheet material such as a photograph, drinking water put in a container such as a spout pouch, a vacuum pack product, a granular medicine wrapped with a press-through package (PTP), or the like may be used as the package 100 as the special grip control target as necessary.

In addition, at the time of the special grip control, the package may not be directly gripped by the grip portion 20, but may be scooped up with a net or a basket, or gripped through magnetic force or the like.

In addition, the type of the package 100 is specified from the sensor group 12G on the basis of the detection value of the sensor 12 whose detection value exceeds the allowable range, but a contact sensor may be attached to the grip portion 20 to predict the type of the package 100 by a so-called first touch. In the case of the contact sensor, for example, it is possible to sort soft packages as compared with other packages 100 such as fresh food item 110, and it is possible to specialize in gripping more gently (so as not to deform) than the other packages 100.

### [Fifth Embodiment]

Hereinafter, a fifth embodiment of the disclosure will be described. In the fifth embodiment, the same components as those in the first to fourth embodiments are denoted by the same reference numerals, and the description of the configurations is omitted.

The suction pad 24 of the fifth embodiment has an air suction structure, and sucks air in the sealed space from a hole 24C provided in the nipple 24B to perform vacuum (including substantially vacuum), thereby having a suction force. The main purpose of the nipple 24B is to suck air, but in the case of a cleaning mode to be described below, the nipple 24B can also discharge air (to be described below in detail). With respect to the suction force, the suction pad 24 is not limited to the air suction structure, and a structure in which the volume of the sealed space is simply changed by the deformation of the pad portion 24A to cause adhesion may be used in combination.

### (Cleaning Mode)

Meanwhile, for example, when the package 100 suctioned by the grip portion 20 is stored in a warehouse or the like for a long period, dust may adhere to the surface.

This dust decreases the suction force of the suction pad 24 and the soft material 102, and may become a factor that the package 100 cannot be reliably gripped.

In addition, picking of the package 100 is basically intended for delivery to a customer, and the fact that the package 100 with dust attached thereto is delivered to the customer may adversely affect the reliability relationship between the delivery company and the customer.

Therefore, in the fifth embodiment, the palm sensor 26 is caused to function as a sensor that detects dust, and it is determined whether or not dust adheres to the package 100 on the basis of detection information of the palm sensor 26, and it is determined whether or not cleaning is necessary.

In the cleaning mode, the suction pad 24 which is originally attached to suction the package 100 is used.

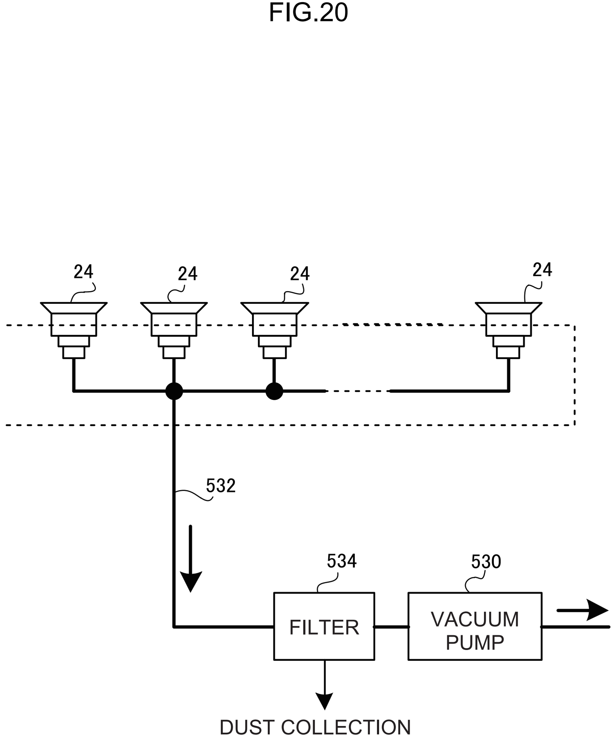

As illustrated in Fig. 3(B), the suction pad 24 has a structure that sucks air from the hole 24C provided in the nipple 24B by driving of a vacuum pump 530 (see Fig. 20), and when the pad portion 24A is in close contact with the package 100, the suction force is exerted.

As illustrated in Fig. 20, a filter 534 is interposed on the upstream of the vacuum pump 530 in a pipe 532 of the suction pad 24 of the fifth embodiment.

The filter 534 has a function of preventing dust collected by suction of air from reaching the vacuum pump 530 and collecting the dust.

By providing the filter 534, when the suction pad 24 is brought close to the dust or the like attached to the package 100 (to such an extent that pad portion 24A does not come into close contact with package 100), the dust or the like is sucked and collected by the filter 534.

On the other hand, since the dust and the like do not reach the vacuum pump 530, the suction (main purpose) function of the subsequent package 100 is not affected.

### (Grip Control of Package 100)

Hereinafter, the grip control of the package 100 executed by the control unit 142 will be described.

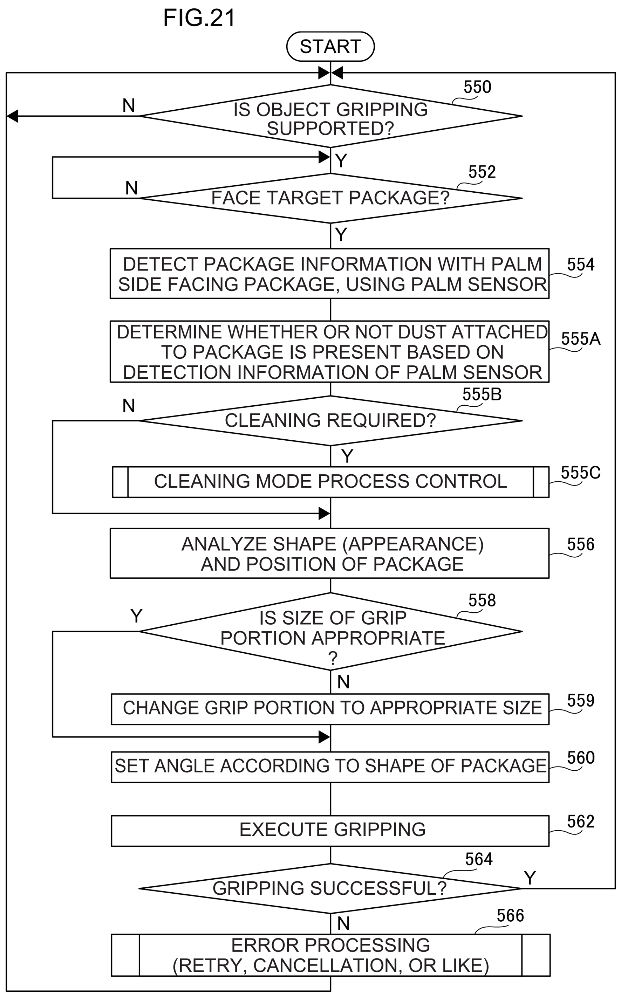

Fig. 21 is a flowchart illustrating a procedure of the grip control in the fifth embodiment when gripping the package 100 by selecting the grip portions 20S, 20M, and 20L in Figs. 3 and 4 in conjunction with the overall operation of humanoid robot 1.

In Step 550, whether the instruction to grip the package 100 is received is determined, and when an affirmative determination is made, the process proceeds to Step 552, humanoid robot 1 is moved (for example, any one of arm portions 15, 16, and 17 is operated), the palm side 20A is made to face target package 100, and the process proceeds to Step 554.

In Step 554, information on the package 100 is detected with the palm side 20A facing the package, using the palm sensor 26.

In Step 554, information on the package 100 is detected with the palm side 20A facing the package, using the palm sensor 26.

Here, the detection information of the palm sensor 26 is mainly intended to determine a gripping form (selection of grip portion 20, gripping method, and the like) when gripping the package 100, but has a secondary purpose of determining whether or not there is dirt such as adhesion of dust on the surface of the package 100, separately from this main purpose.

That is, in the next Step 555A, the presence or absence of dust attached to the package 100 is determined on the basis of the detection information of the palm sensor 26.

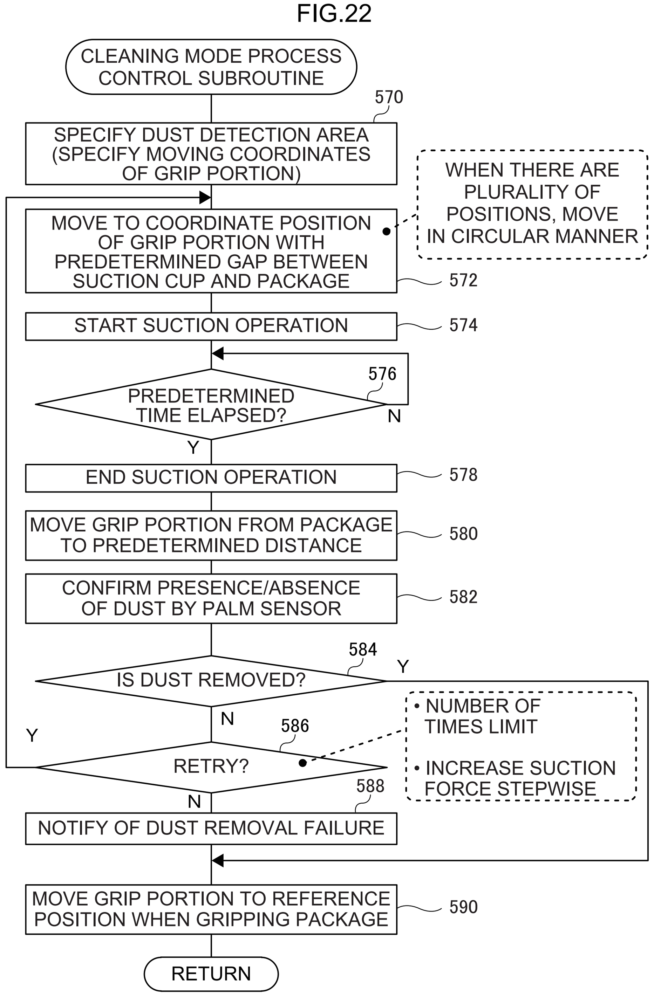

In the next Step 555B, it is determined whether or not cleaning of the package 100 is necessary. When an affirmative determination is made in Step 555B, the process proceeds to Step 555C, the cleaning mode process control (see Fig. 22, to be described below in detail) is executed, and the process proceeds to Step 556.

When a negative determination is made in Step 555C, the process proceeds to Step 556.

In the next Step 556, the detection information by the palm sensor 26 (high-resolution camera and MoPU) is analyzed to grasp the type (shape, size, hardness, and the like) and position of the package 100 in detail, and the process proceeds to Step 558.

In Step 558, it is determined whether or not the size of the grip portion 20 is appropriate for griping the package 100. When it is determined in Step 558 that the size is inappropriate (negative determination), the processing proceeds to Step 559, and the size is changed to the arm portion 15, 16, or 17 of the appropriate size, and the processing proceeds to Step 560. Note that the criteria for determining the appropriateness of the size include whether or not the size of the package 100 detected by the palm sensor 26 is within a predetermined size and weight range that are appropriate for each of the grip portions 20. In addition, the determination is not limited to the flowchart of Fig. 21, and when the load applied to the grip portion 20 is a predetermined value or more (for example, a current value for generating driving force necessary for grip portion 20 to lift package 100 is a predetermined value or more, or the like) after the package is once gripped by the grip portion 20 designated in advance, the grip may be temporarily released to change the grip portion 20.

When it is determined in Step 558 that the size is appropriate (affirmative determination), the process proceeds to Step 560.

In Step 560, the angles of the grip portion 20S of the arm portion 15, the grip portion 20M of the arm portion 16, and the grip portion 20L of the arm portion 17 according to the shape of the package 100 are set, and the process proceeds to Step 562.

In Step 562, gripping of the package 100 is executed.

Here, in the fifth embodiment, since the grip portion 20 is covered with the soft material 102, the soft material 102 comes into contact with the package 100, deforms in accordance with the shape of the package 100, and comes into close contact with the package 100 at the time of the suction processing of the suction pad 24.

In the next Step 564, it is determined whether or not the gripping of the package 100 has succeeded. In a case where an affirmative determination is made, the gripped package 100 is carried to a predetermined place, and the process proceeds to Step 550 and waits for an instruction to grip the next object.

In addition, in a case where a negative determination is made in Step 564, the process proceeds to Step 566, error processing (for example, retry or cancellation) is executed, and the process returns to Step 550.

As described above, according to the fifth embodiment, since the grip portion 20 is covered with the soft material 102, the soft material 102 is brought into close contact with the package 100 at the time of suction by the plurality of suction pads 24, and thus, it is possible to reliably hold the package 100 by being used as an auxiliary holding force at the time of suctioning the package 100 in the air suction structure of the suction pad 24, for example.

That is, in the soft material 102, the point contact of the suction pad 24 with respect to the package 100 is replaced with the surface contact, and thus, it is possible to stabilize the holding force of the package 100, and it is possible to prevent a problem such as falling off due to vibration at the time of movement in advance.

In addition, even if the package 100 is accommodated in a narrow tote and the suction pad 24 cannot be positioned as desired, the package can be reliably suctioned by the suction pad 24 after being adhered to and pulled out by the soft material 102.

In the fifth embodiment, the palm sensor 26 including the high-resolution camera and the MoPU is attached, and the grip portion 20 having the above structure is mounted on the arm portions 15, 16, and 17 of the humanoid robot 1, so that the object can surely be picked up by the suction surface, and even if the humanoid robot 1 moves quickly, the package 100 can be carried without dropping from the grip portion 20.

Furthermore, since the palm sensor 26 (high-resolution camera and MoPU) is mounted on the palm side 20A, the package 100 can be captured with high accuracy, and it is possible to cope with work that makes minute movement.

### (Cleaning Mode Process Control)

Fig. 22 is a flowchart illustrating a cleaning mode process control subroutine executed in Step 555C of Fig. 21.

In Step 570, a detection area of dust or the like is specified (in terms of control, movement coordinates of grip portion 20 are specified).

In the next Step 572, the grip portion 20 is moved to the coordinate position with a predetermined gap between the suction pad 24 and the package 100. Note that, in a case where there are a plurality of coordinate positions, it is sufficient to move in a circular manner.

In the next Step 574, the vacuum pump 530 is driven to start the suction operation. As a result, dust or the like (including dust floating around package 100) attached to the package 100 is sucked, and the surface of the package 100 is cleaned. This cleaning can not only clean the package 100 but also obtain an effect of suppressing a subsequent decrease in suction force.

In the next Step 576, it is determined whether or not a predetermined time has elapsed. For example, the suction operation may be stopped at the coordinate position in about 10 seconds to 30 seconds, or may be performed while moving when the suction pad cycles through the coordinate positions.

When an affirmative determination is made in Step 576, the process proceeds to Step 578, the suction operation is terminated, and the process proceeds to Step 580.

In Step 580, the grip portion 20 is moved from the package 100 to a predetermined distance, and then the process proceeds to Step 582 to check whether there is dust or the like by the palm sensor 26, and the process proceeds to Step 584.

In Step 584, it is determined whether dust or the like has been removed. When a negative determination is made, the process proceeds to Step 586, and it is determined whether to retry. In this determination, the number of times may be limited, or the suction force may be increased stepwise in addition to the limit on the number of times.

When an affirmative determination is made in Step 586, the process returns to Step 572, and the above process is repeated. When a negative determination is made in Step 586, the process proceeds to Step 588.

In Step 588, a notification indicating that the removal of dust or the like has failed is executed, and the process proceeds to Step 590. When an affirmative determination is made in Step 584, the process proceeds to Step 590.

When the notification of the failure of the removal of dust or the like is received, for example, when there is contamination equal to or more than a prescribed level or there is a possibility that adhesion may be hindered, another process such as wiping the package 100 with a nonwoven fabric or the like can be executed.

In Step 590, the grip portion 20 is moved to the reference position for gripping the package 100, and this routine ends.

### (Second Modification)

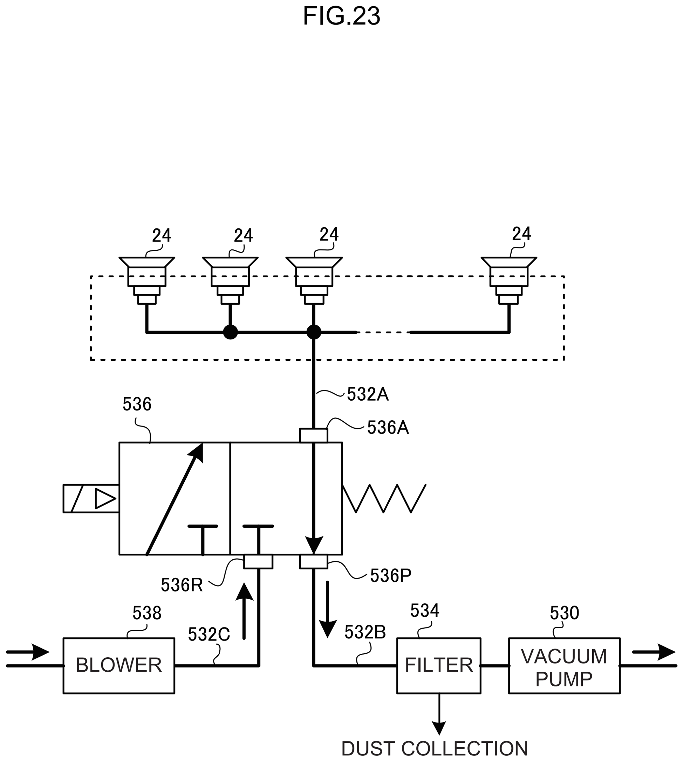

Fig. 23 illustrates a piping structure of the suction pad 24 according to a second modification of the fifth embodiment.

In the second modification, an electromagnetic valve 536 is interposed in the pipe 532 of the suction pad 24.

The electromagnetic valve 536 includes four ports 536A, 536P, and 536R. The pipe 532A communicating with the suction pad 24 is connected to the port 536A. The pipe 532B communicating with the filter 534 and the vacuum pump 530 is connected to the port 536P. The pipe 532C newly provided as the second modification is connected to the port 536R, and the pipe 532C is connected to the blower 538.

In the non-excited state of the electromagnetic valve 536, the port 536A and the port 536P communicate with each other, and the port 536R is closed. On the other hand, in the excitation state of the electromagnetic valve 536, the port 536A and the port 536R communicate with each other, and the port 536P is closed.

That is, when the electromagnetic valve 536 is not excited, the suction pad 24 has a function of suctioning the package 100, which is a main purpose, and a function of sucking dust, which is a secondary purpose.

On the other hand, when the electromagnetic valve 536 is excited, the air from the blower 538 is supplied to the suction pad 24, and thus, the air is discharged from the hole 24C provided in the nipple 24B of the suction pad 24, and has a function as a so-called air duster.

That is, in the second modification, first, the blower 538 blows off the dust and the like attached to the package 100, still sucks the dust and the like remaining on the package 100, and then, grips (suctions) the package 100.

As a result, in addition to the cleanliness of the package 100, it is possible to suppress a decrease in suction force due to dust or the like.

### (Third Modification)

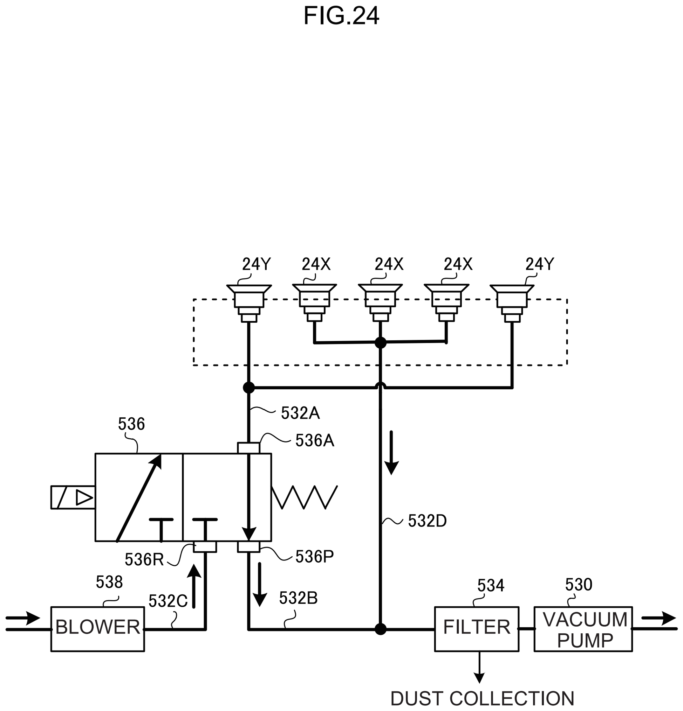

Fig. 24 illustrates a piping structure of the suction pad 24 according to a second modification of the fifth embodiment.

In a third modification, the configuration in which the electromagnetic valve 536 is interposed is the same as that in the second modification.

A difference from the second modification is that a part (for example, the inner peripheral side) of the plurality of suction pads 24 provided in the grip portion 20 is dedicated to suction (suction pad 24X), and the other part (for example, the outer peripheral side) is shared between suction and air dust (suction pad 24Y). Therefore, the pipe 532D is directly connected between the suction pad 24X and the filter 534.

That is, when the electromagnetic valve 536 is not excited, all the suction pads 24 (suction pads 24X and suction pads 24Y) suck the dust and the like attached to the package 100 and grip (suction) the package 100.

On the other hand, when the electromagnetic valve 536 is excited, some of the suction pads 24X continue to suck dust and the like, but the air from the blower 538 is released from the some other suction pads 24Y.

Thereafter, by de-energizing the electromagnetic valve 536, the gripping (suction) of the package 100 is executed by all the suction pads 24 (suction pads 24X and suction pads 24Y).

By discharging the air from the outer peripheral side of the grip portion 20, the dust and the like attached to the package 100 are guided to the inner peripheral side while being surrounded, and the dust and the like collected on the inner peripheral side are sucked at once, so that it is possible to efficiently remove the dust and the like.

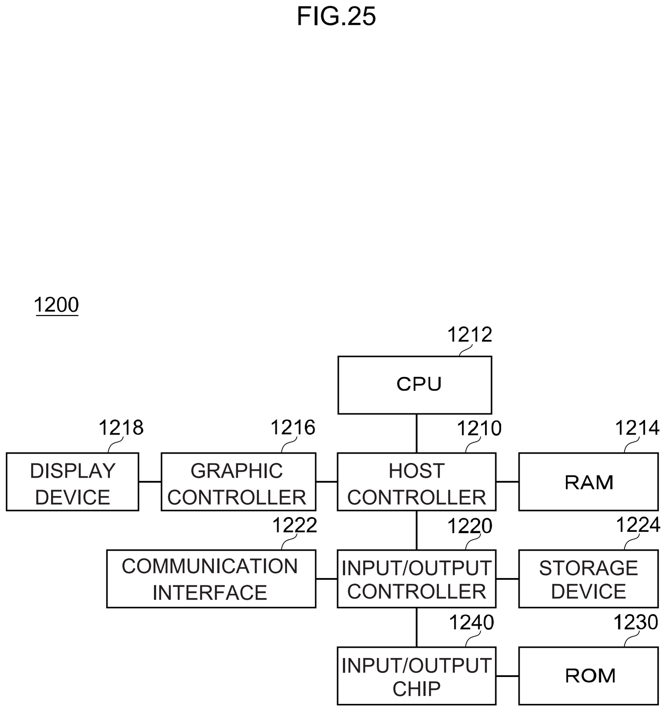

Fig. 25 schematically illustrates an example of a hardware configuration of a computer 1200 that functions as the information processing device 14. The program installed in the computer 1200 can cause the computer 1200 to function as one or more "units" of the device according to the embodiment, or cause the computer 1200 to execute an operation associated with the device according to each embodiment or one or more "units" thereof, and/or cause the computer 1200 to execute a process according to each embodiment or a stage of the process. Such programs may be executed by a CPU 1212 to cause the computer 1200 to perform certain operations associated with some or all of the blocks in the flowcharts and block diagrams described herein.

The computer 1200 according to the embodiment includes a CPU 1212, a RAM 1214, and a graphic controller 1216, which are mutually connected by a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 obtains image data generated by the CPU 1212 in a frame buffer or the like provided in the RAM 1214 or the graphic controller itself, and causes the image data to be displayed on the display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads the program and data from the IC card and/or writes the program and data to the IC card.

The ROM 1230 stores therein a boot program executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. The information processing described in these programs is read by the computer 1200 and provides cooperation between the programs and the various types of hardware resources described above. The device or method may be configured by implementing operation or processing of information according to use of the computer 1200.

For example, in a case in which communication is performed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

In addition, the CPU 1212 may cause the RAM 1214 to read all or a necessary portion of a file or database stored in an external recording medium such as the storage device 1224, a DVD drive (DVD-ROM), an IC card, or the like, and may execute various types of processing on data on the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and writes back the results to the RAM 1214. In addition, the CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches the specified condition from the plurality of entries, read the attribute value of the second attribute stored in the entry, and thereby acquire the attribute value of the second attribute associated with the first attribute satisfying the predetermined condition.

The program or software module described above may be stored in a computer-readable storage medium on the computer 1200 or in the vicinity of the computer 1200. Furthermore, a recording medium such as a hard disk or a RAM provided in a server system connected to a dedicated communication network or the Internet can be used as a computer-readable storage medium, thereby providing a program to the computer 1200 via the network.

The blocks in the flowcharts and block diagrams in this embodiment may represent stages of a process in which an operation is performed or "units" of a device that are responsible for performing the operation. Certain stages and "units" may be implemented by dedicated circuit, programmable circuit provided with computer-readable instructions stored on a computer-readable storage medium, and/or a processor provided with computer-readable instructions stored on a computer-readable storage medium. The dedicated circuits may include digital and/or analog hardware circuits, and may include integrated circuits (ICs) and/or discrete circuits. The programmable circuit may include reconfigurable hardware circuit including, for example, logical conjunction, logical disjunction, exclusive disjunction, NAND, NOR, and other logical operations, flip-flops, registers, and memory elements, such as field programmable gate arrays (FPGA) and programmable logic arrays (PLA).

A computer-readable storage medium may include any tangible device capable of storing instructions for execution by a suitable device, such that a computer-readable storage medium having instructions stored therein includes a product including instructions that may be executed to create means for performing the operations specified in the flowcharts or block diagrams. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy disk (registered trademark), a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-Ray disk (registered trademark), a memory stick, an integrated circuit card, and the like.

The computer-readable instructions may include either source code or object code written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), JAVA (registered trademark), C++, or the like, and conventional procedural programming languages, such as the "C" programming language or similar programming languages.

The computer-readable instructions may be provided for a processor of general purpose computer, special purpose computer, or other programmable data processing device, or a programmable circuit, either locally or a local area network (LAN), or over a wide area network (WAN), such as the Internet, or the like, to cause the processor of general purpose computer, special purpose computer, or other programmable data processing device, or the programmable circuit to execute the computer-readable instructions to generate means for performing the operations specified in the flowcharts or block diagrams. Examples of the processor include a computer processor, a processing unit, a microprocessor, a digital signal processor, a controller, a microcontroller, and the like.

Although the disclosure has been described above with reference to the embodiments, the technical scope of the disclosure is not limited to the scope described in the embodiments. It is apparent to those skilled in the art that various modifications or improvements can be made to the above embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even if the operation flow in the claims, the specification, and the drawings is described using "First,", "Next,", and the like for convenience, it does not mean that it is essential to perform in this order.

Although the disclosure has been described above with reference to the embodiments, the technical scope of the disclosure is not limited to the scope described in the embodiments. It is apparent to those skilled in the art that various modifications or improvements can be made to the above embodiments. It is apparent from the description of the claims that a mode to which such a change or improvement is added can also be included in the technical scope of the disclosure.

It should be noted that the order of execution of each processing such as operations, procedures, steps, and stages in the devices, systems, programs, and methods illustrated in the claims, the specification, and the drawings can be realized in any order unless "before", "prior to", or the like is explicitly stated, and unless the output of the previous processing is used in the later processing. Even if the operation flow in the claims, the specification, and the drawings is described using "First,", "Next,", and the like for convenience, it does not mean that it is essential to perform in this order.

The disclosure of Japanese Patent Application No. 2023-005419 filed on January 17, 2023, the disclosure of Japanese Patent Application No. 2023-049064 filed on March 24, 2023, the disclosure of Japanese Patent Application No. 2023-060997 filed on April 4, 2023, the disclosure of Japanese Patent Application No. 2023-067473 filed on April 17, 2023, and the disclosure of Japanese Patent Application No. 2023-078870 filed on May 11, 2023 are incorporated herein by reference in their entirety.

All documents, patent applications, and technical standards described in this specification are incorporated herein by reference to the same extent as if each individual document, patent application, and technical standard were specifically and individually indicated to be incorporated by reference.

## Claims

1. A robot hand comprising:
a grip portion that serves as a base for holding an object;
a suction pad that is provided on the grip portion and adhering to the object; and
an amorphous mucilaginous and viscoelastic soft material that covers a surface of the grip portion with a predetermined thickness in a state where the suction pad protrudes and is deformable in accordance with an operation of the grip portion.

2. A robot control system capable of holding an object while facing the object, the control system comprising:
a grip portion serving as a base for holding the object;
a suction pad provided on the grip portion and adhering to the object;
an amorphous mucilaginous and viscoelastic soft material that covers a surface of the grip portion with a predetermined thickness in a state where the suction pad protrudes and is deformable in accordance with an operation of the grip portion;
a palm sensor unit provided on the grip portion and detecting object information including a shape and a position of the object; and
a control unit that controls an operation of gripping the object on the basis of a detection result of the palm sensor unit.

3. The robot control system according to claim 2, wherein the palm sensor unit includes:
a camera that captures an image of the object to identify a type of the object; and a motion processing unit that specifies a position of the object.

4. The robot control system according to claim 2, wherein the control unit determines a state of an adhesive function with respect to the object in the soft material.

5. The robot control system according to claim 4, wherein the control unit shifts the robot from a gripping processing operation of the object to a function recovery processing operation for recovering the function of the soft material in a case where it is determined that the adhesive function is deteriorated in the determination of the adhesive function.

6. A function recovery processing system provided in a robot including a grip portion serving as a base for holding the object and an amorphous mucilaginous and viscoelastic soft material that is deformable in accordance with an operation of the grip portion, the system comprising: a robot control unit that controls an operation of the grip portion to execute a gripping operation of gripping the object by using both gripping by the grip portion and adhesion by the soft material; and a management server that instructs the robot control unit to perform the gripping operation and control a maintenance process in a dock station that executes maintenance of the robot,
wherein the robot control unit includes
a function determination unit that determines a state of an adhesive function with respect to the object in the soft material, and
a destination setting unit that sets a destination of the robot to the dock station in a case where the function determination unit determines that a function is deteriorated, and
the management server includes
a function recovery processing unit that executes a function recovery process for recovering a function of the soft material as a part of the maintenance process in a case where the robot is docked in the dock station.

7. The function recovery processing system according to claim 6, wherein the function recovery processing executed by the function recovery processing unit is executed by selecting either a replacement processing function of removing the existing soft material, supplying new soft material, and covering the grip portion, or a cleaning processing function of cleaning a surface of the existing soft material.

8. A function recovery processing program causing a computer to operate as the function recovery processing unit according to claim 6 or 7.

9. A robot control system comprising:
a plurality of grip portions that grips an object;
a palm sensor unit provided in each of a plurality of the grip portions to detect object information including a shape and a position of the object; and
a control unit that selects the grip portion to grip the object, executes a gripping operation to grip the object on the basis of a detection result of the palm sensor unit attached to the selected grip portion, and determines pass/fail for whether detection information of the palm sensor units attached to a plurality of the grip portions has reached a predetermined accuracy level,
wherein the palm sensor unit attached to the selected grip portion detects the object information using a substitute sensor unit in a case where the determination fails.

10. The robot control system according to claim 9, wherein the substitute sensor unit is a palm sensor unit attached to a non-selected grip portion or a substitute dedicated support sensor unit attached to the robot.

11. The robot control system according to claim 9, wherein the determination of pass/fail in the control unit is made on the basis of information that is periodically or irregularly executed and updated.

12. The robot control system according to claim 9, wherein
the grip portion includes
a suction pad that adheres to the object, and
an amorphous mucilaginous and viscoelastic soft material that is covered with a predetermined thickness on a surface of the grip portion in a state where the suction pad protrudes and is deformable in accordance with an operation of the grip portion.

13. The robot control system according to claim 10, wherein the palm sensor unit includes
a camera that captures an image of the object to identify a type of the object, and a processing unit that specifies a position of the object.

14. A robot control system comprising:
a plurality of grip portions attached to a robot and grips an object;
a sensor group having a first function of acquiring external information for controlling an operation of the robot and a second function of acquiring object information from the object; and
a control unit that moves the robot to a predetermined position on the basis of the external information and the object information, and controls the grip portions to grip the object by the grip portions,
wherein the control unit
grips the special object on the basis of a predetermined gripping form for the special object in a case in which a special object is selected by the second function of the sensor group.

15. The robot control system according to claim 14, wherein the control unit
selects the special object in a case where an allowable range of a predetermined detection value has been deviated from, when information is detected by facing the object using the second function of the sensor group, and
specifies a type of the special object on the basis of detection information of a sensor in which the detection value deviates from the allowable range.

16. The robot control system according to claim 14, further comprising a storage unit in which a type-gripping form table in which the type of the special object and the gripping form of the special object are associated with each other is stored in advance,
wherein the control unit grips the special object by the gripping form for the special object determined on the basis of the type-gripping form table.

17. A robot control system capable of holding an object while facing the object, the control system comprising:
a grip portion serving as a base for holding the object;
an actuator provided in the grip portion and having a vacuum function for suctioning the object and sucking dust attached to the object;
a palm sensor unit that is provided in the grip portion and detects object information including a shape and a position of the object;
a first control unit that activates the vacuum function of the actuator as necessary on a basis of a detection result of the palm sensor unit and controls an operation of holding the object; and
a second control unit that activates the vacuum function of the actuator prior to the operation of holding the object by the first control unit.

18. The robot control system according to claim 17, wherein the actuator further includes a blower function for wiping off dust attached to the object, and the second control unit uses both the vacuum function and the blower function.

19. The robot control system according to claim 18, wherein the actuator is a suction pad including a dish-shaped pad portion having an elastic force and a nipple provided with a hole capable of sucking and releasing air provided at a center of the pad portion.

20. The robot control system according to claim 17, further comprising a dust detection sensor that detects whether dust is adhered to a surface of the object, wherein
the operation of the second control unit is executed in a case where it is determined that dust is adhered from a detection result of the dust detection sensor.

21. The robot control system according to claim 17, further comprising an amorphous mucilaginous and viscoelastic soft material that is covered with a predetermined thickness on a surface of the grip portion in a state where the actuator is protruding and that is deformable in accordance with an operation of the grip portion.

22. The robot control system according to claim 17, wherein the palm sensor unit includes
a camera that captures an image of the object to identify a type of the object, and a motion processing unit that specifies a position of the object.

23. A robot control program causing a computer to operate as the control unit according to any one of claims 2 to 5 and 9 to 22.
